# EUROPEAN PATENT SPECIFICATION

(11) **EP 4 425 736 B1**
(45) Date of publication and mention of the grant of the patent: **12.08.2026**
(21) Application number: 22887240.4
(22) Date of filing: 01.11.2022
(51) Int. Cl.: H01M 10/42, H02J 7/50, H02J 7/56, H02J 7/60, H02J 7/80, H02J 7/40

(54) **ELECTRIC POWER SYSTEM, METHOD FOR CONTROLLING ELECTRIC POWER SYSTEM, PROGRAM, STORAGE MEDIUM, AND ELECTRIC POWER DEVICE**
ELEKTRISCHES STROMSYSTEM, VERFAHREN ZUR STEUERUNG DES ELEKTRISCHEN STROMSYSTEMS, PROGRAMM, SPEICHERMEDIUM UND ELEKTRISCHE STROMVORRICHTUNG
SYSTÈME D'ALIMENTATION ÉLECTRIQUE, PROCÉDÉ DE COMMANDE DE SYSTÈME D'ALIMENTATION ÉLECTRIQUE, PROGRAMME, SUPPORT DE STOCKAGE ET DISPOSITIF D'ALIMENTATION ÉLECTRIQUE

(30) Priority: 01.11.2021 JP 2021178696
(43) Date of publication of application: 04.09.2024
(73) Proprietor: HONDA MOTOR CO., LTD., Tokyo 105-8404 (JP)
(72) Inventor: HOSOE, Yukihiro, Wako-shi, Saitama 351-0193 (JP)
(74) Representative: Kiwit, Benedikt
(86) International application number: PCT/JP2022/040929
(87) International publication number: WO 2023/074915

(56) References cited:
- EP-A1- 3 618 218
- EP-B1- 3 582 360
- WO-A1-2018/147046
- JP-A- 2006 526 305
- JP-A- 2017 175 858
- US-A1- 2011 279 087

## Description

### TECHNICAL FIELD

The present invention relates to an electrical power system, a method of controlling an electrical power system, a program, a storage medium, and an electrical power device.

### BACKGROUND ART

In WO 2018/147046 A1 (hereinafter referred to as a prior art document) and in EP 3 582 360 B1, a storage battery management system is disclosed which is equipped with two electrical power storage devices (storage batteries), and an electrical power device in which the two electrical power storage devices are attachably and detachably mounted. Each of the two electrical power storage devices includes an electrical power storage unit.

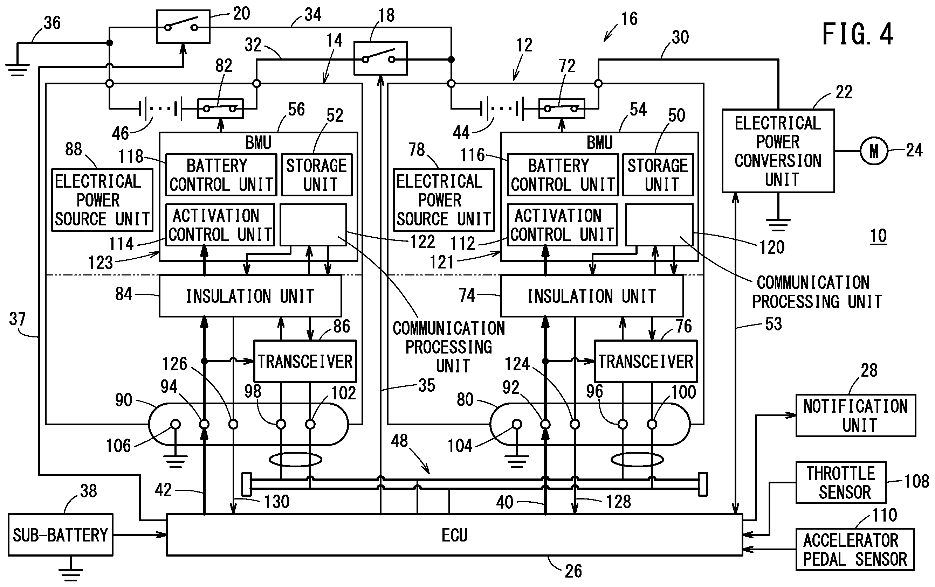

In the case that the two electrical power storage devices are caused to be started, the electrical power device generates a starting signal (an activation signal) based on the electrical power supplied from the sub-battery. The electrical power device starts outputting the starting signal which is generated based on the electrical power supplied from the sub-battery to the two electrical power storage devices in the form of activation signals in order to cause the two electrical power storage devices to be started (refer to SA11 in FIG. 4 of the prior art document). In accordance with this feature, based on the starting signal from the electrical power device, the two electrical power storage devices switch from being in an inactive state to an active state, and perform an initialization process (refer to SB11, SB12, SC11, and SC12 in FIG. 4 of the prior art document). Moreover, the inactive state is a state in which the electrical power storage unit in the interior of the electrical power storage device and the exterior of the electrical power storage device are incapable of being electrically connected. The active state is a state in which the electrical power storage unit in the interior of the electrical power storage device and the exterior of the electrical power storage device are capable of being electrically connected.

After the initialization process is completed, the electrical power device stops supplying the starting signal to the two electrical power storage devices (refer to SA13 in FIG. 4 of the prior art document). Consequently, the two electrical power storage devices switch from the active state to the inactive state (refer to SB13 and SC13 in FIG. 4 of the prior art document).

Next, the electrical power device restarts supplying the starting signal to one of the electrical power storage devices (refer to SA21 in FIG. 4 of the prior art document). Consequently, the one of the electrical power storage devices switches from the inactive state to the active state (refer to SB21 in FIG. 4 of the prior art document). Moreover, the other of the electrical power storage devices is maintained in the inactive state.

Next, the electrical power device assigns with respect to the one of the electrical power storage devices that is in the active state identification information, for example, an identification number, in order to identify the electrical power storage device (refer to SA22 and SB22 in FIG. 4 of the prior art document). After the identification number has been assigned, the electrical power device stops supplying the starting signal to the one of the electrical power storage devices (refer to SA23 in FIG. 4 of the prior art document). In accordance with this feature, the one of the electrical power storage devices switches from the active state to the inactive state (refer to SB23 in FIG. 4 of the prior art document).

Next, the electrical power device restarts supplying the starting signal to the other of the electrical power storage devices (refer to SA31 in FIG. 4 of the prior art document). Consequently, the other of the electrical power storage devices switches from the inactive state to the active state (refer to SC31 in FIG. 4 of the prior art document). Moreover, the one of the electrical power storage devices is maintained in the inactive state.

Next, the electrical power device assigns an identification number with respect to the other of the electrical power storage devices that is in the active state (refer to SA32 and SC32 in FIG. 4 of the prior art document). After the identification number has been assigned, the electrical power device stops supplying the starting signal to the other of the electrical power storage devices (refer to SA33 in FIG. 4 of the prior art document). Consequently, the other of the electrical power storage devices switches from the active state to the inactive state (refer to SC33 in FIG. 4 of the prior art document).

Next, the electrical power device restarts supplying the starting signal to the two electrical power storage devices (refer to SA41 in FIG. 4 of the prior art document). In accordance with this feature, the two electrical power storage devices switch from the inactive state to the active state (refer to SB41 and SC41 in FIG. 4 of the prior art document). Consequently, the starting processes of the two electrical power storage devices are completed.

US 2011/279087 A1 discloses a method and system for identifying cell monitoring controllers in an electric or hybrid vehicle battery pack, which uses a multi-purpose signal line to activate and identify each cell monitoring controller in sequence for use of identical controllers throughout the battery pack.

EP 3 618 218 A1 discloses a power supply system, a fault diagnosis method for power supply system and a system control device to reduce diagnosis time for a power supply system that has multiple battery devices.

### SUMMARY OF THE INVENTION

In the technique of the prior art document, in order to avoid an erroneous assignment of the identification numbers, the starting process is executed while switching the two electrical power storage devices alternately between the active state and the inactive state.

Further, in the technique of the prior art document, after the assignment of the identification numbers has been completed, the electrical power storage devices do not issue a notification to the electrical power device that the assignment of the identification numbers has been completed. Therefore, according to the prior art document, the period in which only one of the electrical power storage devices is in an active state (the period from SB21 to SB23 in FIG. 4 of the prior art document), and the period in which only the other of the electrical power storage devices is in an active state (the period from SC31 to SC33 in FIG. 4 of the prior art document) are assured to be sufficiently long. In the prior art document, by each of the aforementioned periods (fixed time periods) being assured to be sufficiently long, the assignment of the identification numbers is reliably completed.

In this manner, in the technique of the prior art document, time is required for the starting processes of the electrical power storage devices. Accordingly, there is room for improvement in a manner so that the starting processes of the electrical power storage devices can be completed with good efficiency and in a short time period.

The present invention has the object of solving the aforementioned problem.

A first aspect of the present invention is provided by an electrical power system according to claim 1.

A second aspect of the present invention is provided by a method of controlling an electrical power system according to claim 9.

A third aspect of the present invention is provided by a program configured to cause a computer to execute the method of controlling the electrical power system according to the second aspect.

A fourth aspect of the present invention is provided by a storage medium configured to store the program according to the third aspect.

A fifth aspect of the present invention is provided by an electrical power device according to claim 13.

According to the present invention, after the electrical power storage device has been switched from the inactive state to the active state, the transmission information is transmitted to the exterior of the electrical power storage device. The electrical power device or the mounting device, by receiving the transmission information, is capable of recognizing that the starting process of the electrical power storage device has been completed. Therefore, according to the present invention, the electrical power storage device can be started with good efficiency and in a short time period. The invention is defined by the independent claims.

### BRIEF DESCRIPTION OF DRAWINGS

FIG. 1 is a configuration diagram of an electrical power system according to an embodiment;
FIG. 2 is a diagram showing an internal configuration diagram of an ECU;
FIG. 3 is a circuit configuration diagram of the electrical power system;
FIG. 4 is another circuit configuration diagram of the electrical power system;
FIG. 5 is a sequence diagram showing operations of the electrical power system;
FIG. 6 is a timing chart showing operations of the present embodiment;
FIG. 7 is a timing chart showing operations of a first comparative example;
FIG. 8 is a timing chart showing operations of a second comparative example; and
FIG. 9 is a sequence diagram showing an exemplary modification of the operations shown in FIG. 5.

### DESCRIPTION OF THE INVENTION

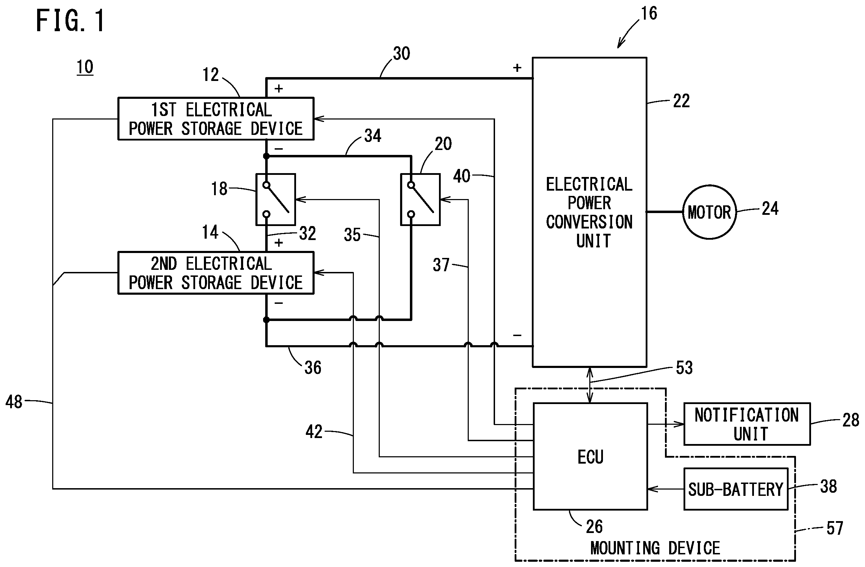

FIG. 1 is a configuration diagram of an electrical power system 10 according to a present embodiment.

The electrical power system 10 is equipped with a first electrical power storage device 12, a second electrical power storage device 14, and an electrical power device 16. Each of the first electrical power storage device 12 and the second electrical power storage device 14 is capable of being attached to and detached from the electrical power device 16. More specifically, each of the first electrical power storage device 12 and the second electrical power storage device 14 is a mobile battery that is capable of being attached to and detached from the electrical power device 16. Further, each of the first electrical power storage device 12 and the second electrical power storage device 14 is a mobile battery that is capable of being charged and discharged. The first electrical power storage device 12 and the second electrical power storage device 14 are preferably, for example, battery packs of detachable lithium ion batteries.

The electrical power system 10 need only be equipped with at least one of the electrical power storage devices. In the case that the electrical power system 10 is equipped with a plurality of the electrical power storage devices, it is sufficient that at least one of the electrical power storage devices from among the plurality of electrical power storage devices is capable of being attached and detached with respect to the electrical power device 16. In the following description, a description will be given concerning a case in which the first electrical power storage device 12 and the second electrical power storage device 14 are capable of being attached to and detached from the electrical power device 16.

The electrical power device 16 includes a first switching unit 18, a second switching unit 20, an electrical power conversion unit 22, a motor 24, an ECU (Electronic Control Unit) 26, and a notification unit 28.

A positive electrode of the first electrical power storage device 12 is electrically connected, via an electrical power line 30, to a positive electrode of an input side (a primary side) of the electrical power conversion unit 22. A negative electrode of the first electrical power storage device 12 is electrically connected, via an electrical power line 32, to a positive electrode of the second electrical power storage device 14. The first switching unit 18 is arranged on the electrical power line 32. Further, the negative electrode of the first electrical power storage device 12 is electrically connected, via another electrical power line 34, to a negative electrode of the second electrical power storage device 14. The second switching unit 20 is arranged on the electrical power line 34. A negative electrode of the second electrical power storage device 14 is electrically connected, via an electrical power line 36, to a negative electrode of a primary side of the electrical power conversion unit 22. The motor 24 is electrically connected to an output side (a secondary side) of the electrical power conversion unit 22.

The first switching unit 18 and the second switching unit 20 are switching elements such as contactors, semiconductor switches, or the like. The first switching unit 18 is switched to an ON state or an OFF state, by a control signal transmitted from the ECU 26 via a signal line 35. The second switching unit 20 is switched to an ON state or an OFF state, by a control signal transmitted from the ECU 26 via a signal line 37.

Specifically, in the case that the first switching unit 18 is in the ON state and the second switching unit 20 is in the OFF state, the first electrical power storage device 12 and the second electrical power storage device 14 are connected in series with respect to the electrical power conversion unit 22. Consequently, DC electrical power is supplied to the electrical power conversion unit 22 from the first electrical power storage device 12 and the second electrical power storage device 14.

In the case that the first switching unit 18 is in the OFF state and the second switching unit 20 is in the ON state, the second electrical power storage device 14 is short-cut. In this case as well, DC electrical power is supplied to the electrical power conversion unit 22 from the first electrical power storage device 12.

In the case that both of the first switching unit 18 and the second switching unit 20 are in the OFF state, the first electrical power storage device 12 and the second electrical power storage device 14 become placed in an electrically disconnected state from the electrical power conversion unit 22.

The electrical power conversion unit 22 is a motor controller that includes an inverter. The electrical power conversion unit 22 converts the DC electrical power supplied from the first electrical power storage device 12 and the second electrical power storage device 14 into an AC electrical power. In accordance with this feature, the motor 24, which serves as a load, is operated by being supplied with the converted AC electrical power. Alternatively, in the case that the motor 24 functions as a generator, the electrical power conversion unit 22 converts the AC electrical power generated by the motor 24 into a DC electrical power. In accordance with this feature, the converted DC electrical power is supplied to the first electrical power storage device 12 and the second electrical power storage device 14. Moreover, it should be noted that, in FIG. 1, the wiring illustrated by thick lines shows lines through which the electrical power is transmitted between the first electrical power storage device 12 and the second electrical power storage device 14, and the motor 24.

The ECU 26, based on the electrical power supplied from a sub-battery 38, generates the activation signals (a command, a first command, a second command, a starting command), which is a starting signal. The ECU 26, via a signal line 40, supplies (outputs) the activation signal to the first electrical power storage device 12. Further, the ECU 26, via a signal line 42, supplies (outputs) the activation signal to the second electrical power storage device 14. Consequently, each of the first electrical power storage device 12 and the second electrical power storage device 14 receives the supplied activation signal, and switches from the inactive state to the active state. When the supply of the activation signal from the ECU 26 to the first electrical power storage device 12 and the second electrical power storage device 14 is stopped, each of the first electrical power storage device 12 and the second electrical power storage device 14 switches from the active state to the inactive state.

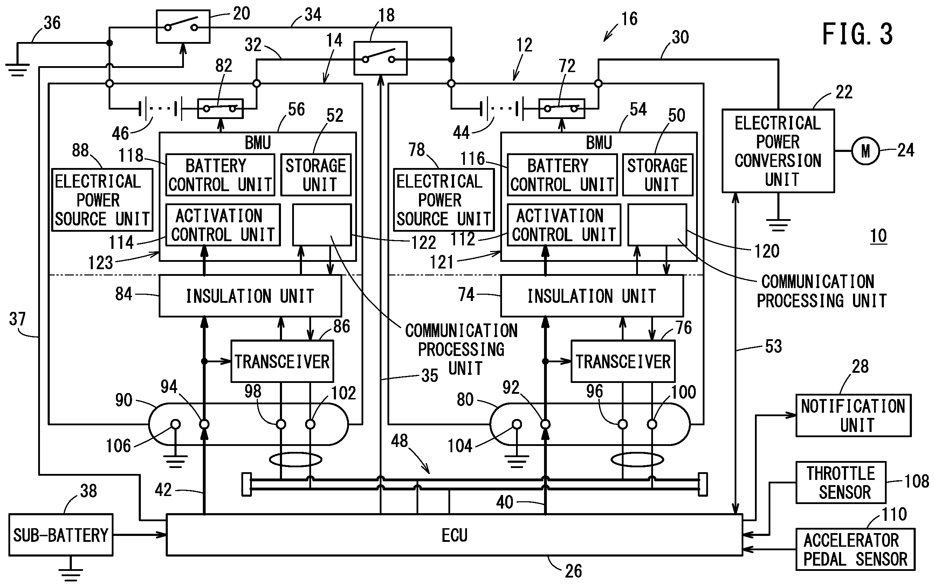

Moreover, the inactive state is a state in which each of respective electrical power storage units 44 and 46 in the interior of the first electrical power storage device 12 and the second electrical power storage device 14 (refer to FIG. 3 and FIG. 4), and the exterior of the first electrical power storage device 12 and the second electrical power storage device 14 are incapable of being electrically connected. Accordingly, in the inactive state, it is impossible for the electrical power to be output to the exterior from each of the electrical power storage units 44 and 46 in the interior of the first electrical power storage device 12 and the second electrical power storage device 14. Further, the active state is a state in which each of the electrical power storage units 44 and 46 are capable of being electrically connected to the exterior thereof. Accordingly, in the active state, it is possible for the electrical power to be output to the exterior from each of the electrical power storage units 44 and 46 in the interior of the first electrical power storage device 12 and the second electrical power storage device 14.

The ECU 26 is capable of transmitting and receiving digital signals to and from the first electrical power storage device 12 and the second electrical power storage device 14 which are in the active state, via a communication line 48 (communication network) such as a CAN (Controller Area Network) or the like. In the case that the ECU 26 and the electrical power storage devices which are in the active state carry out CAN communications, the ECU 26 and the electrical power storage devices which are in the active state transmit and receive digital signals according to a predetermined data frame format. Moreover, since the CAN communications is well known, a detailed explanation of this feature will be omitted.

In the case that at least one of the electrical power storage devices from among the first electrical power storage device 12 and the second electrical power storage device 14 is in the active state, the ECU 26 is capable of transmitting, via the communication line 48, identification information for the purpose of identifying the electrical power storage devices, for example, identification number assignment information (identification assignment information) for the purpose of assigning identification numbers, is capable of being transmitted to the communication line 48. Moreover, it should be noted that the identification information may be any information that is capable of identifying each of the individual electrical power storage devices (the first electrical power storage device 12 and the second electrical power storage device 14). Accordingly, the identification information is not limited to identification numbers, and may be identification symbols such as alphabetical characters or the like. Further, in the case that the identification numbers are not assigned to the electrical power storage devices, the ECU 26 is incapable of specifying the electrical power storage devices, and transmitting such information via the communication line 48. As will be discussed later, after the identification numbers have been assigned to the electrical power storage devices, the ECU 26 is capable of specifying the electrical power storage devices and transmitting such information via the communication line 48.

When the electrical power storage devices which are in the active state receive the identification number assignment information via the communication line 48, an assignment process is executed in order to assign identification numbers to the electrical power storage devices themselves. After having completed the assignment process of assigning the identification numbers, the electrical power storage device which is in the active state is capable of transmitting transmission information including, for example, information concerning the state of the electrical power storage devices to the ECU 26 via the communication line 48.

Moreover, according to the present embodiment, as will be discussed later, upon having switched either one of the electrical power storage devices from among the first electrical power storage device 12 and the second electrical power storage device 14, the assignment process of assigning the identification number with respect to the one of the electrical power storage devices is executed. After having completed the assignment process of assigning the identification number with respect to the one of the electrical power storage devices, while the one of the electrical power storage devices is maintained in the active state, the other of the electrical power storage devices is switched to the active state, and the assignment process of assigning the identification number with respect to the other electrical power storage device is executed.

In the case of the CAN communications, the ECU 26 stores the identification number assignment information in a data field of a data frame, and transmits the same to the communication line 48. When the electrical power storage devices which are in the active state receive via the communication line 48 the identification number assignment information that is stored in the data field of the data frame, the electrical power storage devices execute the assignment process in order to assign identification numbers (for example "1" (number 1)) corresponding to the number (for example "1" (number 1)) included in the identification number assignment information. Accordingly, the identification number assignment information differs from the identification numbers assigned to each of the first electrical power storage device 12 and the second electrical power storage device 14, and is information for the purpose of assigning identification numbers. An identification number is assigned to each of the first electrical power storage device 12 and the second electrical power storage device 14. The identification numbers are unique numbers that differ for each of the electrical power storage devices.

The transmission information includes information indicating that the electrical power storage devices have been switched from an inactive state to an active state, or alternatively, information that is transmitted to the exterior of the electrical power storage devices in the case that the electrical power storage devices are in the active state. As noted previously, since the assignment process of assigning the identification numbers is performed on the electrical power storage devices that have been switched to the active state, the identification number assigned to the electrical power storage devices upon receiving the identification number assignment information may be included in the transmission information. In the case of the CAN communications, the electrical power storage devices which are in the active state store the transmission information in the data field of the data frame, and transmit the same to the ECU 26 via the communication line 48.

The starting process of the electrical power storage devices includes an operation of switching from the inactive state to the active state, an initialization process, and the assignment process of assigning the identification numbers. The transmission information is transmitted to the ECU 26 after the starting process is completed.

In the following description, there are cases in which the transmission information transmitted by the first electrical power storage device 12 may be referred to as first transmission information. Further, there are cases in which the transmission information transmitted by the second electrical power storage device 14 may be referred to as second transmission information.

The initialization process is a process or the like for initializing storage units 50 and 52 (storage media) (refer to FIG. 3 and 4) within the first electrical power storage device 12 and the second electrical power storage device 14 upon receiving the supplied activation signal. Various diagnostic processes within the first electrical power storage device 12 and the second electrical power storage device 14 are also included in the initialization process. The assignment process of assigning the identification numbers is a process in order to store the identification numbers in the storage units 50 and 52.

The transmission information may include predetermined information that is transmitted to the exterior, in the case that the first electrical power storage device 12 and the second electrical power storage device 14 are in the active state. In this case, the first electrical power storage device 12 and the second electrical power storage device 14 may transmit as transmission information to the ECU 26 identification completion information indicating that the identification numbers have been assigned, or alternatively, the identification numbers themselves that have been assigned.

Based on digital signals received via the communication line 48, the ECU 26 switches the first switching unit 18 and the second switching unit 20 to an ON state or an OFF state. Further, the ECU 26 controls the first electrical power storage device 12 and the second electrical power storage device 14 via the communication line 48. Further, the ECU 26 is connected to the electrical power conversion unit 22 via a communication line 53 (refer to FIG. 1 and FIG. 3). The ECU 26, by controlling the electrical power conversion unit 22 via the communication line 53, controls the transmission and reception of electrical power between the first electrical power storage device 12 and the second electrical power storage device 14, and the motor 24.

Moreover, it should be noted that the ECU 26 and the sub-battery 38 shown in FIG. 1 may be configured as a mounting device 57 that is capable of being attached and detached to and from the electrical power device 16. More specifically, within the electrical power device 16, only a portion thereof that is involved in starting the first electrical power storage device 12 and the second electrical power storage device 14 may be configured to be capable of being attached and detached as the mounting device 57 with respect to the electrical power device 16. In this case, it is more preferable for the mounting device 57 to be capable of being attached and detached with respect to the electrical power device 16 without using a separate working tool or the like.

The notification unit 28, based on an instruction from the ECU 26, issues a notification of various types of information to the exterior.

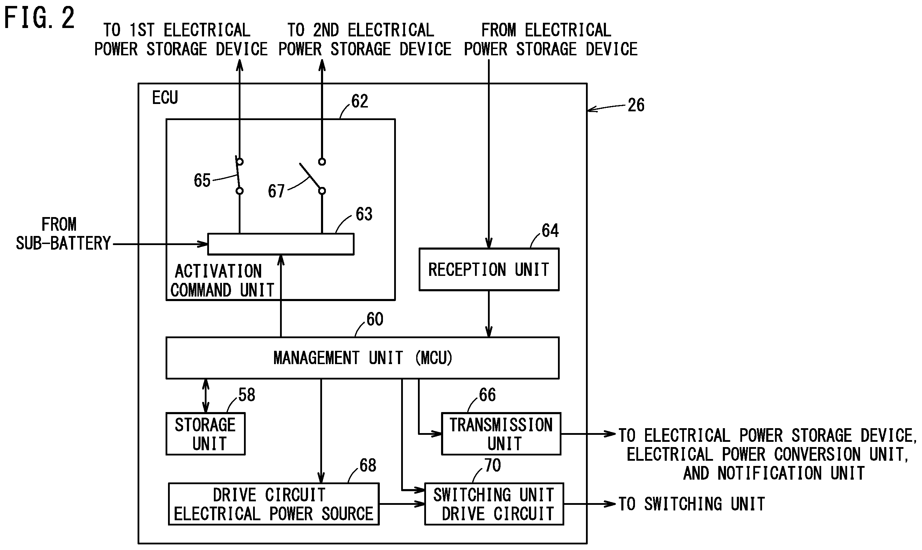

FIG. 2 is a diagram showing an internal configuration diagram of the ECU 26. The ECU 26 is a computer such as a processor or the like. The ECU 26, by reading out and executing a program that is stored in a storage unit 58 (a storage medium), realizes the functions of a management unit 60 (a determination unit), an activation command unit 62, a reception unit 64, a transmission unit 66 (another transmission unit), a drive circuit electrical power source 68, and a switching unit drive circuit 70.

The activation command unit 62 generates activation signals (commands, a first command, a second command) in order to place the first electrical power storage device 12 and the second electrical power storage device 14 (refer to FIG. 1) in a usable state. Specifically, based on the voltage supplied from the sub-battery 38 to the ECU 26, the activation command unit 62 generates as the activation signal a voltage equivalent to such a voltage. In this case, the activation command unit 62 generates an activation signal for each of the first electrical power storage device 12 and the second electrical power storage device 14. The activation command unit 62 supplies the generated activation signals to the first electrical power storage device 12 and the second electrical power storage device 14 via the signal lines 40 and 42. The two signal lines 40 and 42 are wiring lines that are mutually different from each other in relation to the first electrical power storage device 12 and the second electrical power storage device 14. Accordingly, the activation command unit 62 is capable of causing the first electrical power storage device 12 and the second electrical power storage device 14 to be individually activated (started).

Moreover, it should be noted that the activation signals, which are starting commands, are a low-voltage electrical power (a low voltage) in order to cause an activation control unit 112 (refer to FIG. 3) in the interior of the first electrical power storage device 12, and an activation control unit 114 in the interior of the second electrical power storage device 14 to be operated. The signal line 40 is an electrical power line for the purpose of supplying the low voltage electrical power to the activation control unit 112. The signal line 42 is an electrical power line for the purpose of supplying the low voltage electrical power to the activation control unit 114.

To describe this feature more specifically, as shown in FIG. 2, the activation command unit 62 includes an activation signal generation unit 63, a first switch 65, and a second switch 67.

Based on a command from the management unit 60, the activation signal generation unit 63 generates voltages, which are equivalent to the voltage supplied from the sub-battery 38, as the activation signals which are commands in order to switch the first electrical power storage device 12 and the second electrical power storage device 14 to the active state. Moreover, it should be noted that the activation signals are not limited to voltage signals (electrical power signals) based on the voltage of the sub-battery 38. The activation signals may be command signals in order to switch the first electrical power storage device 12 and the second electrical power storage device 14 to the active state.

The first switch 65 is an ON/OFF switch that is connected to the signal line 40. At a time when the first switch 65 is turned ON, an activation signal is supplied from the activation signal generation unit 63 to the first electrical power storage device 12 via the signal line 40. At a time when the first switch 65 is turned OFF, supplying of the activation signal from the activation signal generation unit 63 to the first electrical power storage device 12 is stopped.

The second switch 67 is an ON/OFF switch that is connected to the signal line 42. At a time when the second switch 67 is turned ON, an activation signal is supplied from the activation signal generation unit 63 to the second electrical power storage device 14 via the signal line 42. At a time when the second switch 67 is turned OFF, supplying of the activation signal from the activation signal generation unit 63 to the second electrical power storage device 14 is stopped.

Accordingly, the signal line 40 is a dedicated signal line for the purpose of supplying the activation signal only to the first electrical power storage device 12. Further, the signal line 42 is a dedicated signal line for the purpose of supplying the activation signal only to the second electrical power storage device 14.

The reception unit 64 receives digital signals that are sent from the first electrical power storage device 12 and the second electrical power storage device 14 via the communication line 48. Based on the transmission information which includes digital signals, the management unit 60 determines whether or not the first electrical power storage device 12 and the second electrical power storage device 14 are in the active state. Further, based on the digital signals, the management unit 60 determines whether to place the first switching unit 18 and the second switching unit 20 in either the ON state or the OFF state.

The transmission unit 66, based on instructions from the management unit 60, transmits various information to the first electrical power storage device 12, the second electrical power storage device 14, the electrical power conversion unit 22, and the notification unit 28. Further, the transmission unit 66 is capable of transmitting the identification number assignment information to the communication line 48.

The drive circuit electrical power source 68 is an electrical power source used for driving the switching unit drive circuit 70. The drive circuit electrical power source 68, based on instructions from the management unit 60, supplies the electrical power to the switching unit drive circuit 70. The switching unit drive circuit 70, based on the instructions from the management unit 60 and the supply of electrical power from the drive circuit electrical power source 68, switches the first switching unit 18 and the second switching unit 20 to the ON state or the OFF state. Specifically, the switching unit drive circuit 70 switches the first switching unit 18 to the ON state or the OFF state via the signal line 35 (refer to FIG. 1 and FIG. 3). Further, the switching unit drive circuit 70 switches the second switching unit 20 to the ON state or the OFF state via the signal line 37.

FIG. 3 is a circuit configuration diagram of the electrical power system 10. In FIG. 3, a case is illustrated in which the electrical power system 10 is applied to an electrical power source device of a vehicle (not shown). In this case, the electrical power device 16 including the first switching unit 18, the second switching unit 20, the ECU 26, and the like is mounted in the vehicle. Each of the first electrical power storage device 12 and the second electrical power storage device 14 is capable of being attached and detached with respect to the vehicle. In FIG. 3, concerning the constituent elements that are also illustrated in FIG. 1 and FIG. 2, description of such features will be simplified, or alternatively, description of such features will be omitted.

The first electrical power storage device 12 and the second electrical power storage device 14 have the same configuration. More specifically, the first electrical power storage device 12 includes the electrical power storage unit 44, a BMU 54, a switch 72, an insulation unit 74, a transceiver 76, an electrical power source unit 78, and a connector 80. Further, the second electrical power storage device 14 includes the electrical power storage unit 46, a BMU 56, a switch 82, an insulation unit 84, a transceiver 86, an electrical power source unit 88, and a connector 90.

In each of the first electrical power storage device 12 and the second electrical power storage device 14, the electrical power storage units 44 and 46 are constituted from a plurality of cells that are connected in series. The electrical power storage units 44 and 46 are secondary batteries. The switches 72 and 82 are switching elements such as a contactor, a semiconductor switch, or the like. The switches 72 and 82 are disposed in series with the electrical power storage units 44 and 46. A conductive state of the switches 72 and 82 is controlled by a control from the BMUs 54 and 56. The BMUs 54 and 56 detect the states of the electrical power storage units 44 and 46, and issue a notification to the ECU 26 and the like of the detected states. In this case, the operating states of the BMUs 54 and 56 are determined by a control from the ECU 26 or the like. In accordance with the determined operating states, the BMUs 54 and 56 control a conductive state of the switches 72 and 82.

The insulation units 74 and 84 are optical couplers or the like disposed between the BMUs 54 and 56 and the transceivers 76 and 86. The insulation units 74 and 84 electrically insulate the BMUs 54 and 56 from the connectors 80 and 90. Specifically, the insulation units 74 and 84 electrically insulate and convert the activation signals supplied from A terminals 92 and 94 of the connectors 80 and 90 toward the BMUs 54 and 56. The insulation units 74 and 84 supply the converted activation signals to the BMUs 54 and 56. Moreover, the A terminals 92 and 94 are connected to the ECU 26 via the signal lines 40 and 42.

The transceivers 76 and 86 are disposed between the connectors 80 and 90 and the insulation units 74 and 84. The transceivers 76 and 86 convert signals used for establishing communication between the BMUs 54 and 56 and the ECU 26, and relay the converted signals in both directions. In this case, B terminals 96 and 98 and C terminals 100 and 102 of the connectors 80 and 90 that are connected to the transceivers 76 and 86 are connected to the communication line 48. The electrical power source units 78 and 88 receive the electrical power from the electrical power storage units 44 and 46, and supply a portion of the electrical power to the BMUs 54 and 56 and the insulation units 74 and 84 and the like. In the same manner as in the BMUs 54 and 56, the electrical power source units 78 and 88 are electrically insulated from the connectors 80 and 90 by the insulation units 74 and 84.

As noted previously, the connectors 80 and 90 include a plurality of signal terminals. These signal terminals transmit and receive signals for the purpose of controlling each of the first electrical power storage device 12 and the second electrical power storage device 14. Specifically, the signals that are transmitted and received via the connectors 80 and 90 include the activation signals, and signals in order for the BMUs 54 and 56 to communicate with the ECU 26. In addition to these signal terminals, the connectors 80 and 90 include ground terminals 104 and 106 or the like. Moreover, the connectors 80 and 90 may optically transmit and receive the signals.

The BMUs 54 and 56 monitor the charging or discharging status of the first electrical power storage device 12 and the second electrical power storage device 14, the amount of electrical power stored in the electrical power storage units 44 and 46, the temperature, and the like. The BMUs 54 and 56 share the monitoring results with the ECU 26. Further, based on control commands from the ECU 26, or alternatively, the aforementioned monitoring results, by controlling the switches 72 and 82 and the like, the BMUs 54 and 56 control the charging or discharging between the electrical power storage units 44 and 46 and the exterior.

As noted previously, the transceivers 76 and 86 carry out relaying in both directions between the BMUs 54 and 56 and the ECU 26. Specifically, the transceivers 76 and 86 are operated in the following manner.

The transceiver 76 of the first electrical power storage device 12 operates in a state in which the activation signal is supplied via the first switch 65 from the activation signal generation unit 63 to the first electrical power storage device 12. In the case that the first electrical power storage device 12 is in the active state, at a time when the identification number assignment information is being transmitted by the management unit 60 (refer to FIG. 2) from the transmission unit 66 via the communication line 48, the transceiver 76 receives the identification number assignment information and transmits such information to the BMU 54. Moreover, prior to the identification number being assigned to the electrical power storage device, the ECU 26 is incapable of specifying a destination, or transmitting information such as the identification number assignment information or the like via the communication line 48. Based on the transmitted identification number assignment information, the BMU 54 executes the process of assigning the identification number to the first electrical power storage device 12. After having completed the assignment process of assigning the identification number to the first electrical power storage device 12, the BMU 54 transmits the transmission information including the assigned identification number to the ECU 26 via the transceiver 76 and the communication line 48. The management unit 60 stores in the storage unit 58 the identification number of the first electrical power storage device 12 that is included in the transmission information received by the reception unit 64.

The transceiver 86 of the second electrical power storage device 14 operates in a state in which the activation signal is supplied via the second switch 67 from the activation signal generation unit 63 to the second electrical power storage device 14. In the case that the second electrical power storage device 14 is in the active state, at a time when the identification number assignment information is being transmitted by the management unit 60 from the transmission unit 66 via the communication line 48, the transceiver 86 receives the identification number assignment information and transmits such information to the BMU 56. Based on the transmitted identification number assignment information, the BMU 56 executes the process of assigning the identification number to the second electrical power storage device 14. After having completed the assignment process of assigning the identification number of the second electrical power storage device 14, the BMU 56 transmits the transmission information including the assigned identification number to the ECU 26 via the transceiver 86 and the communication line 48. The management unit 60 stores in the storage unit 58 the identification number of the second electrical power storage device 14 that is included in the transmission information received by the reception unit 64.

Furthermore, output request information from a throttle sensor 108 or an accelerator pedal sensor 110 provided in the vehicle is input to the ECU 26. After the first electrical power storage device 12 and the second electrical power storage device 14 have completed the starting process, then based on the output request information input to the ECU 26, the management unit 60 controls the first electrical power storage device 12, the second electrical power storage device 14, the electrical power conversion unit 22, and the like. By controlling the first electrical power storage device 12 and the second electrical power storage device 14, the ECU 26 controls the charging or discharging of the first electrical power storage device 12 and the second electrical power storage device 14.

The BMUs 54 and 56 are computers such as a processor or the like. The BMUs 54 and 56, by reading out and executing programs stored in the storage units 50 and 52, realizes the functions of the activation control units 112 and 114, the battery control units 116 and 118, and communication processing units 120 and 122 (transmission units, a first transmission unit, a second transmission unit, and other reception units).

Based on the activation signals supplied from the ECU 26, the activation control units 112 and 114 carry out a control in order to switch the states of the first electrical power storage device 12 and the second electrical power storage device 14 from an inactive state in which the electrical power storage units 44 and 46 and the exterior are incapable of being electrically connected to an active state in which the electrical power storage units 44 and 46 and the exterior are capable of being electrically connected. Specifically, the activation control units 112 and 114 receive the supply of the activation signal, and cause the switches 72 and 82 to be turned ON. Furthermore, at the time when the supply of the activation signal is stopped, the activation control units 112 and 114 cause the switches 72 and 82 to be turned OFF. Accordingly, in the inactive state, the electrical power storage units 44 and 46 are incapable of outputting the electrical power to the exterior. Further, in the active state, the electrical power storage units 44 and 46 become capable of outputting the electrical power to the exterior.

Specifically, at a time when the activation control units 112 and 114 have detected that the activation signal is in a significant state, by causing the switches 72 and 82 to be turned ON, the activation control units 112 and 114 switch the first electrical power storage device 12 and the second electrical power storage device 14 to the active state. For example, in the case that the signal level of the activation signal is equivalent to the voltage output from the sub-battery 38, the activation control units 112 and 114 consider that the activation signal is in a significant state (a state in which the activation signal is being supplied), and cause the switches 72 and 82 to be turned ON.

Further, at a time when the activation control units 112 and 114 have detected that the activation signal is not in the significant state, the activation control units switch the first electrical power storage device 12 and the second electrical power storage device 14 to the inactive state. For example, at a time when the signal level of the activation signal has become a level less than a threshold value (roughly a zero level), the activation control units 112 and 114 consider that the activation signal is not in the significant state (a state in which the activation signal is not being supplied), and cause the switches 72 and 82 to be turned OFF.

In this manner, the activation control units 112 and 114 and the switches 72 and 82 function as activation processing units 121 and 123 that act to switch the first electrical power storage device 12 and the second electrical power storage device 14 into the active state or the inactive state.

For example, battery control units 116 and 118 detect changes in the state (the voltage, the SOC, etc.) of each of the cells of the electrical power storage units 44 and 46, and adjust the state of charge of each of the cells to be uniform. Furthermore, under a control from the ECU 26 or the like, the battery control units 116 and 118 control the switches 72 and 82, and thereby place the first electrical power storage device 12 and the second electrical power storage device 14 in the active state in which they are capable of being used.

The communication processing units 120 and 122 communicate with the ECU 26 in accordance with a predetermined protocol. For example, the communication processing units 120 and 122 enable communication of information with the ECU 26 in order to control charging or discharging of the first electrical power storage device 12 and the second electrical power storage device 14. In this case, the communication processing units 120 and 122 enable communication of the information together with the identification numbers that are stored in the storage units 50 and 52.

Further, in the case that the first electrical power storage device 12 and the second electrical power storage device 14 switch from the inactive state to the active state, and further, the starting process is completed, the communication processing units 120 and 122 transmit information to the ECU 26 via the communication line 48. In this case, the communication processing units 120 and 122 may transmit at a predetermined time interval the transmission information to the exterior via the communication line 48. Alternatively, the communication processing units 120 and 122 may transmit the transmission information to the ECU 26. Alternatively, as shown in FIG. 4, the communication processing units 120 and 122 may transmit via dedicated communication lines 128 and 130 the transmission information to the ECU 26 from D terminals 124 and 126 that are provided in the connectors 80 and 90. In any of such cases, the reception unit 64 is capable of receiving the transmission information via the communication lines 48, 128, and 130.

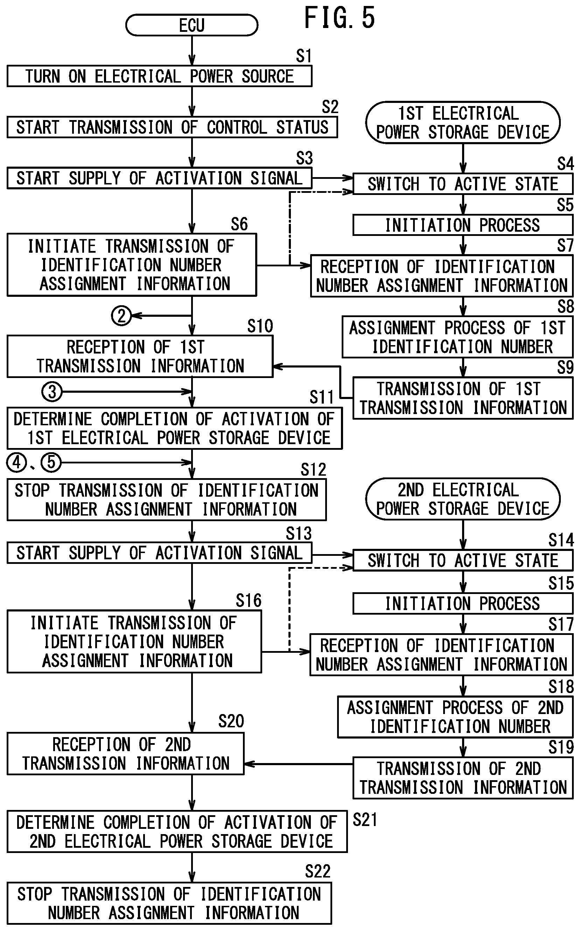

The electrical power system 10 according to the present embodiment is configured in the manner described above. Next, a description will be given with reference to the flowcharts of FIG. 5 to FIG. 9 concerning the operations of the electrical power system 10. In this instance, as necessary, descriptions will be given with reference to FIG. 1 to FIG. 4. These operations are operations concerned with starting of the first electrical power storage device 12 and the second electrical power storage device 14.

First, in response to an operation of a starting switch (not shown) installed in the electrical power device 16, in step S1 shown in FIG. 5, the ECU 26 (refer to FIG. 1) is started by the electrical power supplied from the sub-battery 38.

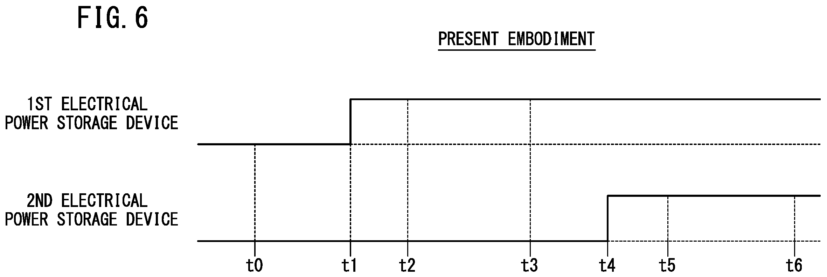

In step S2, at time t0 (refer to FIG. 6), the management unit 60 (refer to FIG. 2) of the ECU 26 begins transmitting a control status, which is information indicating that the ECU 26 has been started, from the transmission unit 66 via the communication line 48. The control status is also transmitted to the first electrical power storage device 12 and the second electrical power storage device 14 via the communication line 48. Consequently, in the case that the BMU 54 of the first electrical power storage device 12 (refer to FIG. 3 and FIG. 4) and the BMU 56 of the second electrical power storage device 14 are started in a state in which the control status is being transmitted, then by receiving the control status, the BMUs 54 and 56 can recognize that the ECU 26 has been started. Further, by receiving the control status, thereafter, the BMUs 54 and 56 are capable of recognizing that the ECU 26 will transmit some type of command.

In the next step S3 (the first step), the management unit 60 (see FIG. 2) of the ECU 26 issues an instruction with respect to the activation command unit 62 to start supplying the activation signal (the first command) to the first electrical power storage device 12. The activation command unit 62, together with turning ON the first switch 65, issues an instruction with respect to the activation signal generation unit 63 to generate the activation signal. Based on the voltage supplied from the sub-battery 38, the activation signal generation unit 63 generates the activation signal. The activation signal generation unit 63 supplies the generated activation signal to the activation control unit 112 of the first electrical power storage device 12 via the signal line 40 (refer to FIG. 3 and FIG. 4). Consequently, the BMU 54 of the first electrical power storage device 12 is started by the supplied low voltage electrical power which serves as the activation signal. As noted previously, since the control status has already been transmitted, by receiving the control status, the BMU 54 is capable of recognizing that the ECU 26 is started.

In the next step S4 (the second step), at time t1, the activation control unit 112 of the activation processing unit 121 detects that the supplied activation signal is in a significant state. As a result, based on the supply of the activation signal, the activation control unit 112 turns ON the switch 72. Consequently, the first electrical power storage device 12 switches from the inactive state to the active state.

In the next step S5, the BMU 54 executes the initialization process of the first electrical power storage device 12. Consequently, together with the storage unit 50 and the like being initialized, various diagnostic processes within the first electrical power storage device 12 are executed.

In the next step S6 (the seventh step), at time t2, the management unit 60 initiates the transmission of first identification number assignment information (for example, "1" (the number 1)) to the communication line 48 via the transmission unit 66.

As noted previously, the first electrical power storage device 12 is switched to the active state, and the BMU 54 is already activated. Therefore, in the next step S7, the communication processing unit 120 receives the first identification number assignment information that is transmitted to the communication line 48. Moreover, the second electrical power storage device 14 is in the inactive state, and the BMU 56 is not activated. Therefore, even in the case that the first identification number assignment information is transmitted to the communication line 48, the second electrical power storage device 14 is incapable of receiving the first identification number assignment information.

In the next step S8, based on the first identification number assignment information, the BMU 54 executes the assignment process of assigning a first identification number (the first identification information) which is the identification number of the first electrical power storage device 12. Specifically, upon receiving the first identification number assignment information, the BMU 54 stores the first identification number in the storage unit 50.

In the next step S9 (the third step), the communication processing unit 120 transmits to the ECU 26 as the first transmission information the identification completion information indicating that the first identification number assignment process has been completed. In this case, the communication processing unit 120 may include in the first transmission information the first identification number that is stored in the storage unit 50, and may transmit the first transmission information to the ECU 26. Further, in the case of transmitting the first transmission information to the ECU 26, the communication processing unit 120 transmits at a predetermined time interval the first transmission information to the exterior via the communication line 48. Alternatively, the communication processing unit 120 transmits the first transmission information to the ECU 26 via the communication line 48, or alternatively, via the dedicated communication line 128 (refer to FIG. 4).

In the next step S10 (the fourth step), the reception unit 64 receives the first transmission information. The reception unit 64 outputs the received first transmission information to the management unit 60.

In the next step S11 (the fifth step), based on the first transmission information received by the reception unit 64, the management unit 60 determines whether or not the first electrical power storage device 12 has been switched to the active state. In the case that the transmission information that was received is the first transmission information from the first electrical power storage device 12, the management unit 60 determines that the first electrical power storage device 12 has been switched to the active state.

In the next step S12, at time t3, based on the determination result of step S11, the management unit 60 stops the transmission of the first identification number assignment information.

In the next step S13 (the sixth step), the management unit 60 issues an instruction to the activation command unit 62 to start supplying the activation signal (the second command) to the second electrical power storage device 14. The activation command unit 62, in accordance with the instruction from the management unit 60, causes the second switch 67 to be turned ON. As a result, the activation signal generation unit 63 starts supplying the activation signal to the activation control unit 114 of the second electrical power storage device 14 via the signal line 42. Consequently, the BMU 56 of the second electrical power storage device 14 is started by the supplied low voltage electrical power which serves as the activation signal. As noted previously, since the control status has already been transmitted, by receiving the control status, the BMU 56, by receiving the control status, is capable of recognizing that the ECU 26 is started. Moreover, the activation command unit 62 continues the supply of the activation signal to the activation control unit 112 of the first electrical power storage device 12.

In the next step S14, at time t4, the activation control unit 114 detects that the supplied activation signal is in a significant state. As a result, based on the supply of the activation signal, the activation control unit 114 causes the switch 82 to be turned ON. Consequently, the second electrical power storage device 14 switches from the inactive state to the active state.

In the next step S15, the BMU 56 executes the initialization process of the second electrical power storage device 14. Consequently, together with the storage unit 52 and the like being initialized, various diagnostic processes within the second electrical power storage device 14 are executed.

In the next step S16, at time t5, the management unit 60 initiates the transmission of second identification number assignment information (for example, "2" (the number 2)) to the communication line 48 via the transmission unit 66.

As noted previously, the second electrical power storage device 14 is switched to the active state, and the BMU 56 is already activated. Therefore, in the next step S17, the communication processing unit 122 receives the second identification number assignment information that is transmitted to the communication line 48.

Moreover, it should be noted that, since the first electrical power storage device 12 is in the active state, and the BMU 54 is in the started state, the BMU 54 is capable of receiving the second identification number assignment information. However, since the first identification number has already been assigned to the first electrical power storage device 12 in step S8, even if the BMU 54 receives the second identification number assignment information, the BMU 54 ignores the received second identification number assignment information. Accordingly, it is possible to prevent the identification information from being erroneously assigned to the first electrical power storage device 12.

In the next step S18, based on the second identification number assignment information, the BMU 56 executes the assignment process of assigning a second identification number (the second identification information) which is the identification number of the second electrical power storage device 14. Consequently, the BMU 56 stores the second identification number in the storage unit 52.

In the next step S19, the communication processing unit 122 transmits the identification completion information to the ECU 26 as the second transmission information. In this case as well, the communication processing unit 122 may include in the second transmission information the second identification number that is stored in the storage unit 52, and may transmit the second transmission information to the ECU 26. Further, in the case of transmitting the second transmission information to the ECU 26, the communication processing unit 122 transmits at a predetermined time interval the second transmission information via the communication line 48. Alternatively, the communication processing unit 122 transmits the second transmission information to the ECU 26 via the communication line 48, or alternatively, via the dedicated communication line 130 (refer to FIG. 4).

In the next step S20, the reception unit 64 receives the second transmission information. The reception unit 64 outputs the received second transmission information to the management unit 60.

In the next step S21, based on the second transmission information received by the reception unit 64, the management unit 60 determines whether or not the second electrical power storage device 14 has been switched to the active state. In the case that the transmission information that was received is the second transmission information from the second electrical power storage device 14, the management unit 60 determines that the second electrical power storage device 14 has been switched to the active state.

In the next step S22, at time t6, based on the determination result of step S21, the management unit 60 stops the transmission of the second identification number assignment information.

After the starting process of FIG. 5, a precharging process is carried out in the first electrical power storage device 12 and the second electrical power storage device 14. More specifically, in the case that a capacitor or the like is present in an external load such as the electrical power conversion unit 22 and the motor 24 or the like, then at the time when charging or discharging of the first electrical power storage device 12 and the second electrical power storage device 14 is started, there are cases in which an inrush current, which is an excess electrical current, may occur. By carrying out the precharging process, it is possible to suppress the occurrence of such an excess electrical current. It should be noted that, since the precharging process is well known, a detailed explanation of this feature is omitted.

After the precharging process, the ECU 26 controls the first electrical power storage device 12 and the second electrical power storage device 14 via the communication line 48, and thereby carries out charging or discharging of the first electrical power storage device 12 and the second electrical power storage device 14.

Moreover, it should be noted that, as shown by the dashed line in FIG. 5, the process of step S16 may be executed immediately after step S13 without waiting for step S14 and step S15. In accordance with this feature, in the second electrical power storage device 14, the process of step S17 can be executed immediately after the completion of step S15. As a result, since the BMU 56 of the second electrical power storage device 14 can immediately receive the identification number assignment information, it is possible to rapidly execute the process of assigning the identification number. As a result, the time required for the starting process of the second electrical power storage device 14 can be shortened.

Moreover, as shown by the one-dot-dashed line in FIG. 5, in the same manner as in the first electrical power storage device 12, concerning the process of step S6, the process may be executed immediately after step S3 without waiting for step S4 and step S5. In accordance with this feature, in the first electrical power storage device 12, the process of step S7 can be executed immediately after the completion of step S5. As a result, since the BMU 54 of the first electrical power storage device 12 can immediately receive the identification number assignment information, it is possible to rapidly execute the process of assigning the identification number. Accordingly, in the first electrical power storage device 12, the time required for the starting process can be shortened.

Further, after the process of step S1, the ECU 26 may sequentially carry out the processes of step S6 and step S3 in this order. Consequently, after the processes of step S4 and step S5, the first electrical power storage device 12 can rapidly receive the identification number assignment information in step S7. As a result, the first electrical power storage device 12 can be started in a short time period.

Furthermore, the ECU 26 can also carry out the process with respect to the second electrical power storage device 14 sequentially in the order of step S16 and step S13.

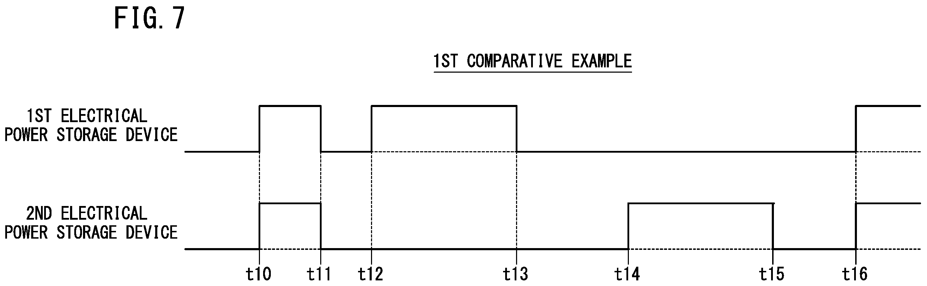

FIG. 7 is a timing chart showing operations of a first comparative example. The operations of the first comparative example, for example, are operations of the electrical power system according to the prior art document. In the description of FIG. 7, concerning the same constituent elements as those of the electrical power system 10 (refer to FIG. 1) according to the present embodiment, such constituent elements will be described using the same reference numerals.

In the first comparative example, at time t10, the supply of the activation signal to the first electrical power storage device 12 and the second electrical power storage device 14 is initiated. Consequently, the first electrical power storage device 12 and the second electrical power storage device 14 switch from the inactive state to the active state. The initialization process is carried out respectively in the first electrical power storage device 12 and the second electrical power storage device 14.

After the initialization process is completed, at time t11, the supply of the activation signal to the first electrical power storage device 12 and the second electrical power storage device 14 is stopped. Consequently, the first electrical power storage device 12 and the second electrical power storage device 14 are switched from the active state to the inactive state.

At time t12, the supply of the activation signal to the first electrical power storage device 12 is restarted. Consequently, the first electrical power storage device 12 switches from the inactive state to the active state. Thereafter, in the first electrical power storage device 12, the process of assigning the first identification number is executed.

In the first electrical power storage device 12, after the assignment process of assigning the first identification number is completed, at time t13, the supply of the activation signal to the first electrical power storage device 12 is stopped. Consequently, the first electrical power storage device 12 switches from the active state to the inactive state.

At time t14, the supply of the activation signal to the second electrical power storage device 14 is restarted. Consequently, the second electrical power storage device 14 switches from the inactive state to the active state. Thereafter, in the second electrical power storage device 14, the process of assigning the second identification number is executed.

In the second electrical power storage device 14, after the assignment process of assigning the second identification number is completed, at time t15, the supply of the activation signal to the second electrical power storage device 14 is stopped. Consequently, the second electrical power storage device 14 switches from the active state to the inactive state.

At time t16, the supply of the activation signal to the first electrical power storage device 12 and the second electrical power storage device 14 is restarted. Consequently, the first electrical power storage device 12 and the second electrical power storage device 14 switch from the inactive state to the active state.

In this manner, in the first comparative example, in order to avoid identification numbers being assigned redundantly to the first electrical power storage device 12 and the second electrical power storage device 14, the activation process is carried out while alternately switching between the inactive state and the active state.

Further, in the first comparative example, after the assignment of the identification numbers is completed, the first electrical power storage device 12 and the second electrical power storage device 14 do not issue a notification to the ECU 26 that the assignment of the identification numbers has been completed. Therefore, in the first comparative example, a period (from time t12 to time t13) in which only the first electrical power storage device 12 is in the active state, and a period (from time t14 to t15) in which only the second electrical power storage device 14 is in the active state are assured to be sufficiently long. In the first comparative example, by each of the aforementioned periods (fixed time periods) being assured, the assignment of the identification numbers is reliably completed.

Accordingly, in the first comparative example, time is required for the starting processes of the first electrical power storage device 12 and the second electrical power storage device 14.

In contrast thereto, according to the present embodiment, as shown in FIG. 6, after the starting process of the first electrical power storage device 12 (refer to FIG. 1) has been carried out, the starting process of the second electrical power storage device 14 is performed. Consequently, the first electrical power storage device 12 and the second electrical power storage device 14 can be started with good efficiency and in a short time period. Further, the first electrical power storage device 12 to which the first identification number has been assigned upon receiving the first identification number assignment information ignores the second identification number assignment information, and therefore, it is possible to prevent an identification number from being assigned thereto by mistake. As a result, the identification numbers can be accurately and reliably assigned to the first electrical power storage device 12 and the second electrical power storage device 14. Furthermore, since the first identification number of the first electrical power storage device 12 is confirmed prior to the second electrical power storage device 14 being started, the started state of the first electrical power storage device 12 can be maintained even during the starting process of the second electrical power storage device 14. As a result, after the starting processes of the first electrical power storage device 12 and the second electrical power storage device 14, it becomes possible to quickly output to the exterior the electrical power from the first electrical power storage device 12 and the second electrical power storage device 14. Consequently, a reduction in the amount of electrical power stored in the sub-battery 38 and a deterioration thereof can also be suppressed.

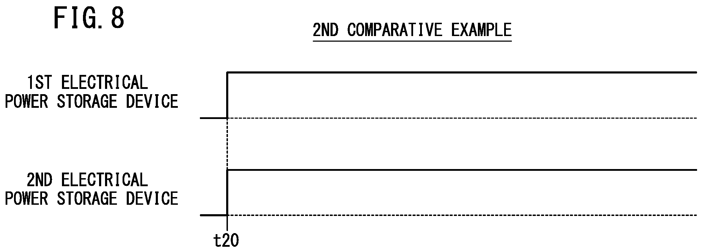

FIG. 8 is a timing chart showing operations (NG operations) of a second comparative example. At time t20, activation signals are simultaneously supplied with respect to the first electrical power storage device 12 (refer to FIG. 1) and the second electrical power storage device 14, and identification number assignment information is transmitted via the communication line 48. Consequently, the starting processes of the first electrical power storage device 12 and the second electrical power storage device 14 are performed simultaneously, and the same identification number is assigned redundantly to the first electrical power storage device 12 and the second electrical power storage device 14. As a result, the first electrical power storage device 12 and the second electrical power storage device 14 transmit transmission information including the redundant identification number to the ECU 26. The ECU 26 is incapable of performing a subsequent control thereafter with respect to the first electrical power storage device 12 and the second electrical power storage device 14.

In contrast thereto, according to the present embodiment, the first electrical power storage device 12 and the second electrical power storage device 14 implement the starting process one by one. Consequently, it is possible to prevent the same identification number from being redundantly assigned with respect to the plurality of electrical power storage devices as in the second comparative example.

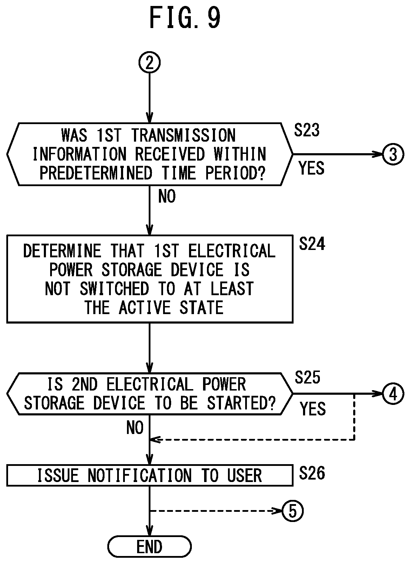

FIG. 9 is a sequence diagram showing an exemplary modification of the operations shown in FIG. 5. According to this exemplary modification, a portion of the operations of the ECU 26 (refer to FIG. 1) are changed.

Specifically, after step S6, in step S23, the management unit 60 (refer to FIG. 2), during a predetermined time period from the activation command unit 62 having started to supply the activation signal to the first electrical power storage device 12 in step S3, determines whether or not the reception unit 64 was capable of receiving the identification completion information (the first transmission information).

In the case that the reception unit 64 was capable of receiving the first transmission information during the predetermined time period (step S23: YES), the management unit 60 executes the process of step S11.

In the case that the reception unit 64 is incapable of receiving the first transmission information during the predetermined time period (step S23: NO), in the next step S24, the management unit 60 determines that the first electrical power storage device 12 has not been switched to at least the active state.

In the next step S25, the management unit 60 determines whether or not to cause the second electrical power storage device 14 to be started. In the case that the management unit 60 has determined to cause the second electrical power storage device 14 to be started (step S25: YES), the process of step S12 is executed.

In the case that the second electrical power storage device 14 is not caused to be started (step S25: NO), the management unit 60 determines that both the first electrical power storage device 12 and the second electrical power storage device 14 are incapable of being activated. In the next step S26, the management unit 60 issues a notification to the external user, via the notification unit 28, that the first electrical power storage device 12 and the second electrical power storage device 14 are incapable of outputting electrical power.

Moreover, in step S25, in the case that the management unit 60 has determined to cause the second electrical power storage device 14 to be started (step S25: YES), then as shown by the dashed line in FIG. 9, the process of step S26 may be executed. In this case, in step S26, although the first electrical power storage device 12 (refer to FIG. 1) cannot be started, the management unit 60 (refer to FIG. 2) issues a notification to the external user via the notification unit 28 to the effect that the second electrical power storage device 14 is capable of being activated. Thereafter, the management unit 60 executes the process of step S12.

Moreover, it should be noted that, in the present embodiment, the electrical power device 16 is not limited to an electrical power source for a vehicle. The electrical power device 16 may be various types of electrical power source devices, such as various chargers, electrical power supplying devices, exchangers, and the like.

Further, in the present embodiment, the electrical power storage unit for the purpose of supplying the electrical power in order to start the first electrical power storage device 12 and the second electrical power storage device 14 is not limited to the sub-battery 38. A battery, a capacitor, or the like which is provided in a vehicle may be used as the electrical power storage unit in order to supply the electrical power to the first electrical power storage device 12 and the second electrical power storage device 14. Further, the electrical power storage unit may be separated from the vehicle. Furthermore, the electrical power storage unit may be capable of being attached and detached with respect to the vehicle.

Furthermore, in the description provided above, a description has been given concerning a case in which the electrical power system 10 includes the first electrical power storage device 12 and the second electrical power storage device 14. According to the present embodiment, the electrical power system 10 may include one of the electrical power storage devices. In this case, by applying the processes shown in FIG. 5 and FIG. 9, it is possible to quickly carry out a determination as to whether the activation with respect to the one electrical power storage device has been completed. Further, the electrical power system 10 may include three or more of the electrical power storage devices. In this case, the processes shown in FIG. 5 and FIG. 9 can be easily applied as well to the activation processes of the third and subsequent electrical power storage devices.

Further still, in the description provided above, a description has been given concerning a case in which the first electrical power storage device 12 and the second electrical power storage device 14 are connected in series. According to the present embodiment, in the case that the first electrical power storage device 12 and the second electrical power storage device 14 are connected in parallel, then even in the case that three or more of the electrical power storage devices are connected in series or in parallel, the processes shown in FIG. 5 and FIG. 9 can easily be applied. For example, in the case that a plurality of the electrical power storage devices are connected in parallel, if there is an electrical power storage device that is not started, the remaining electrical power storage devices may be used to output electrical power to the exterior.

Further, according to the present embodiment, by connecting the ECU 26 to the first electrical power storage device 12 and the second electrical power storage device 14 via the dedicated signal lines 40 and 42, it is possible to implement the starting process for the first electrical power storage device 12 and the second electrical power storage device 14 one by one. Therefore, according to the present embodiment, using a communication line apart from the communication line 48, transmission and reception of the information may be carried out between the ECU 26 and the first electrical power storage device 12 and the second electrical power storage device 14. For example, together with connecting the ECU 26 and the first electrical power storage device 12 through a communication line, the ECU 26 and the second electrical power storage device 14 may be connected through another communication line.

The electrical power system 10 is capable of being applied to various electrical power source systems that supply the electrical power to a load or the like from the plurality of the power storage devices, or alternatively, that charge the plurality of electrical power storage devices. The electrical power system 10 is capable of being installed in a residence, a business office, or alternatively, a public facility or the like.

The electrical power system 10 is also capable of being applied to electrical power supply systems of various types of mobile bodies. Mobile bodies on which people are capable of riding, or alternatively, mobile bodies on which people are incapable of riding are included in the various types of mobile bodies. As the mobile bodies of such a type, there may be cited vehicles, aircraft, flying objects, ships, and the like. Further, as the electrical power supply systems of the vehicles, there may be cited an electrical power supply system of an electric vehicle such as an electric automobile or the like, and an electrical power supply system of a vehicle in which a drive motor is mounted such as a hybrid vehicle. More specifically, the electrical power system 10 is capable of being applied to electrical power supply systems of various types of vehicles such as a one-wheeled vehicle, a two-wheel vehicle, or alternatively, a four-wheel vehicle or the like. In the case that the electrical power system 10 is applied to a mobile body, as shown in FIG. 1, the mounting device 57 may be configured to be capable of being attached to and detached from the mobile body.

The electrical power system 10 is also capable of being applied to electrical power supply systems of various general-purpose devices. Specifically, as the various general-purpose devices, there may be cited (1) various charging devices, (2) various discharging devices, and (3) various working machines such as general-purpose working machines, lawn mowers, tillers, and blowers or the like. Further, as the various general-purpose devices, there may be cited (4) electrical devices in which electric motors are not included, such as floodlights and lighting devices or the like, and (5) various devices installed in residential dwellings, buildings, or the like. In this case as well, as shown in FIG. 1, the mounting device 57 may be configured to be capable of being attached to and detached from the general-purpose device.

Concerning items (1) through (5), such devices may be general-purpose devices that do not have a person riding thereon. Further, concerning item (3), the working machine may be a working machine that does not have a person riding thereon. Alternatively, concerning item (3), the working machine may be a working machine that has a person riding thereon. Furthermore, as examples of the aforementioned item (5), there may be cited (A) equipment that operates on the basis of DC electrical power, as in audio equipment such as clocks and radio cassette recorders and the like, and (B) equipment that operates on the basis of AC electrical power such as electric fans, juicers, mixers, or alternatively, incandescent electric lamps or the like. Further, as other examples of the aforementioned item (5), there may be cited (C) equipment that operates on the basis of DC electrical power that is converted from AC electrical power, such as televisions, radios, stereos, or alternatively, personal computers or the like. Furthermore, as other examples of the aforementioned item (5), there may be cited (D) inverter type equipment including washing machines, refrigerators, air conditioners, microwave ovens, and fluorescent lamps. The equipment of the aforementioned item (D) is equipment that operates on the basis of AC electrical power, which after having been temporarily converted from AC electrical power to DC electrical power, is then further converted from the DC electrical power.

Concerning the invention that is capable of being grasped from the above-described embodiment, the description thereof will be given below.

The first aspect of the present invention is the electrical power system (10) equipped with the electrical power storage device (12, 14) including the electrical power storage unit (44, 46), and the electrical power device (16) to and from which the electrical power storage device is configured to be attached and detached, the electrical power storage device including the activation processing unit (121, 123) configured to switch the state of the electrical power storage device to the active state in which the electrical power storage unit and the exterior of the electrical power storage device are electrically connectable, or alternatively, the inactive state in which the electrical power storage unit and the exterior of the electrical power storage device are not electrically connectable, and the transmission unit (120, 122) configured to transmit the transmission information to the exterior of the electrical power storage device, wherein the electrical power device, or alternatively, the mounting device (57) mounted on the electrical power device includes the activation command unit (62) configured to output the command to the activation processing unit, and the reception unit (64) configured to receive the transmission information from the exterior of the electrical power device or the exterior of the mounting device, the activation processing unit is provided so as to switch to the active state or the inactive state in accordance with the command output from the activation command unit, and the transmission information includes at least one from among the information indicating that the electrical power storage device has switched from the inactive state to the active state, or alternatively, the information transmitted to the exterior of the electrical power storage device in a case that the electrical power storage device is in the active state.

In accordance with such a configuration, after the electrical power storage device has been switched from the inactive state to the active state, the transmission information is transmitted to the exterior of the electrical power storage device. The electrical power device or the mounting device, by receiving the transmission information, is capable of recognizing that the activation process of the electrical power storage device has been completed. Accordingly, the electrical power storage device can be started with good efficiency and in a short time period.

In the first aspect of the present invention, the electrical power device or the mounting device further includes the determination unit (60) configured to determine, based on the transmission information received by the reception unit, that the electrical power storage device has switched to the active state, the electrical power storage device includes at least the first electrical power storage device (12) and the second electrical power storage device (14) each of which includes the electrical power storage unit, the first electrical power storage device includes the first activation processing unit (121) which is the activation processing unit, and the first transmission unit (120) which is the transmission unit, the second electrical power storage device includes the second activation processing unit (123) which is the activation processing unit, and the second transmission unit (122) which is the transmission unit, in the case that both of the first electrical power storage device and the second electrical power storage device are in the inactive state, the activation command unit outputs the first command which is the command for switching the first electrical power storage device to the active state only to the first activation processing unit, after the first electrical power storage device has switched to the active state by the first activation processing unit receiving the first command, the first transmission unit transmits the first transmission information which is the transmission information, in the case that the reception unit has received the first transmission information, the determination unit determines that the first electrical power storage device has switched to the active state based on the first transmission information, and after the determination unit has determined that the first electrical power storage device has switched to the active state, the activation command unit outputs the second command which is the command for switching the second electrical power storage device to the active state to the second activation control unit.

With this configuration as well, the first electrical power storage device and the second electrical power storage device can be started with good efficiency and in a short time period. Further, since the starting process of the second electrical power storage device is carried out after the starting process of the first electrical power storage device, it is possible to reliably avoid assigning the identification information redundantly to the first electrical power storage device and the second electrical power storage device.

In an embodiment dd of the present invention, in the case that the reception unit does not receive the first transmission information for the predetermined time period from the activation command unit having output the first command, the determination unit may determine that the first electrical power storage device has not switched to at least the active state, and after the determination unit has determined that the first electrical power storage device has not switched to at least the active state, the activation command unit may output the second command to the second activation processing unit.

In accordance with this feature, it becomes possible to output the electrical power using only the second electrical power storage device.

In an embodiment dd of the present invention, there may further be provided the notification unit (28), in the case that the reception unit does not receive the first transmission information during the predetermined time period after the activation command unit has output the first command, the determination unit may determine that the first electrical power storage device has not switched to at least the active state, and after the determination unit has determined that the first electrical power storage device has not switched to at least the active state, the notification unit may issue the notification to the exterior of the first electrical power storage device that electrical power is incapable of being output from the first electrical power storage device.

In accordance with this feature, a user external to the device can easily grasp the state of the first electrical power storage device.

In an embodiment of the present invention, after the second electrical power storage device has switched to the active state by the second activation processing unit receiving the second command, the second transmission unit may transmit the second transmission information which is the transmission information, and in the case that the reception unit has received the second transmission information, the determination unit may determine, based on the second transmission information, that the second electrical power storage device has switched to the active state.

In accordance with this feature, the electrical power device or the mounting device, by receiving the second transmission information, is capable of easily recognizing that the starting process of the second electrical power storage device has been completed.

In an embodiment dd of the present invention, the transmission unit and the reception unit may be connected to be configured to communicate via the communication network (48), the transmission unit may transmit the transmission information via the communication network, and the reception unit may receive the transmission information via the communication network.

In accordance with this feature, the reception unit is capable of reliably receiving the transmission information.

In an embodiment of the present invention, the electrical power device or the mounting device may include the other transmission unit (66) configured to transmit via the communication network the identification assignment information provided in order to assign the identification information for identifying the first electrical power storage device and the second electrical power storage device, and each of the first electrical power storage device and the second electrical power storage device may include the other reception unit (120, 122) configured to receive the identification assignment information via the communication network.

In accordance with this feature, the other reception unit is capable of reliably receiving the identification assignment information. As a result, the first electrical power storage device and the second electrical power storage device are capable of executing the assignment process of assigning the identification information based on the received identification assignment information.

In an embodiment dd of the present invention, the first transmission information may include the first identification information which is the identification information assigned to the first electrical power storage device by the first reception unit, which is the other reception unit included in the first electrical power storage device, receiving the identification assignment information.

In accordance with this feature, by the electrical power device or the mounting device confirming the first identification information that is included in the received first transmission information, the starting process of the first electrical power storage device can be completed, and together therewith, it can be recognized that the identification information has been assigned to the first electrical power storage device.

In an embodiment dd of the present invention, the other transmission unit may transmit the identification assignment information, in the case that the new one of the electrical power storage devices is mounted on the electrical power device.

In accordance with this feature, each time that the electrical power storage device is replaced, it becomes possible to provide the identification assignment information to the electrical power storage device.

The second aspect of the present invention is the method of controlling the electrical power system according to claim 9.

In this method, after the first electrical power storage device has been switched from the inactive state to the active state, the transmission information is transmitted to the exterior of the first electrical power storage device. Consequently, if the electrical power device or the mounting device receives the transmission information, it can be recognized that the starting process of the first electrical power storage device has been completed. Accordingly, at least the first electrical power storage device can be started with good efficiency and in a short time period.

In the second aspect of the present invention, there may further be included, prior to the third step, the seventh step (step S6) of transmitting the identification assignment information provided in order to assign the identification information for identifying the first electrical power storage device and the second electrical power storage device.

In accordance with this feature, the first electrical power storage device is capable of executing the assignment process of assigning the identification information based on the received identification assignment information.

In the third aspect of the present invention, the program is configured to cause the computer (26) to execute the aforementioned method of controlling the electrical power system.

In this case as well, after the first electrical power storage device has been switched from the inactive state to the active state, the transmission information is transmitted to the exterior of the first electrical power storage device. Consequently, if the electrical power device or the mounting device receives the transmission information, it can be recognized that the starting process of the first electrical power storage device has been completed. Accordingly, at least the first electrical power storage device can be started with good efficiency and in a short time period.

In the fourth aspect of the present invention, the storage medium (58) is configured to store the above-described program.

In this case as well, after the first electrical power storage device has been switched from the inactive state to the active state, the transmission information is transmitted to the exterior of the first electrical power storage device. Consequently, if the electrical power device or the mounting device receives the transmission information, it can be recognized that the starting process of the first electrical power storage device has been completed. Accordingly, at least the first electrical power storage device can be started with good efficiency and in a short time period.

According to an example, not covered by the claims, an electrical power storage device is provided including the electrical power storage unit, including the activation processing unit configured to switch the state of the electrical power storage device to the active state in which the electrical power storage unit and the exterior of the electrical power storage device are electrically connectable, or alternatively, the inactive state in which the electrical power storage unit and the exterior of the electrical power storage device are not electrically connectable, and the transmission unit configured to transmit the transmission information to the exterior of the electrical power storage device, wherein the activation processing unit is provided so as to switch to the active state or the inactive state in accordance with the command from the activation command unit at the exterior of the electrical power storage device, and the transmission information includes at least one from among the information indicating that the electrical power storage device has switched from the inactive state to the active state, or alternatively, the information transmitted to the exterior of the electrical power storage device in the case that the electrical power storage device is in the active state.

With this configuration as well, after the electrical power storage device has been switched from the inactive state to the active state, the transmission information is transmitted to the exterior of the electrical power storage device. Consequently, if the electrical power device or the mounting device receives the transmission information, it can be recognized that the starting process of the electrical power storage device has been completed. Accordingly, the electrical power storage device can be started with good efficiency and in a short time period.

The fifth aspect of the present invention is the electrical power device according to claim 13.

With this configuration as well, after the electrical power storage device has been switched from the inactive state to the active state, the transmission information is transmitted to the exterior of the electrical power storage device. Consequently, if the electrical power device or the mounting device receives the transmission information, it can be recognized that the starting process of the electrical power storage device has been completed.

## Claims

1. An electrical power system (10) equipped with an electrical power storage device (12, 14) including an electrical power storage unit (44, 46), and an electrical power device (16) to and from which the electrical power storage device (12, 14) is configured to be attached and detached;
the electrical power storage device (12, 14) comprising:
an activation processing unit (121, 123) configured to switch a state of the electrical power storage device (12, 14) to an active state in which the electrical power storage unit (44, 46) and an exterior of the electrical power storage device (12, 14) are electrically connectable, or alternatively, an inactive state in which the electrical power storage unit (44, 46) and the exterior of the electrical power storage device (12, 14) are not electrically connectable; and
a transmission unit (120, 122) configured to transmit transmission information to the exterior of the electrical power storage device (12, 14);
wherein the electrical power device (16), or alternatively, a mounting device (57) mounted on the electrical power device (16) includes an activation command unit (62) configured to output a command to the activation processing unit (121, 123), a reception unit (64) configured to receive transmission information from an exterior of the electrical power device (16) or an exterior of the mounting device (57), and a determination unit (60) configured to determine, based on the transmission information received by the reception unit (64), that the electrical power storage device (12, 14) has switched to the active state;
the activation processing unit (121, 123) is provided so as to switch to the active state or the inactive state in accordance with the command output from the activation command unit (62);
the transmission information includes at least one from among information indicating that the electrical power storage device (12, 14) has switched from the inactive state to the active state, or alternatively, information transmitted to the exterior of the electrical power storage device (12, 14) in a case that the electrical power storage device (12, 14) is in the active state;
the electrical power storage device (12, 14) includes at least a first electrical power storage device (12) and a second electrical power storage device (14) each of which includes the electrical power storage unit (44, 46);
the first electrical power storage device (12) includes a first activation processing unit (121) which is the activation processing unit, and a first transmission unit (120) which is the transmission unit;
the second electrical power storage device (14) includes a second activation processing unit (123) which is the activation processing unit, and a second transmission unit (122) which is the transmission unit;
in a case that both of the first electrical power storage device (12) and the second electrical power storage device (14) are in the inactive state, the activation command unit (62) is configured to output a first command which is the command for switching the first electrical power storage device (12) to the active state only to the first activation processing unit (121);
after the first electrical power storage device (12) has switched to the active state by the first activation processing unit (121) receiving the first command, the first transmission unit (120) is configured to transmit first transmission information which is the transmission information;
in a case that the reception unit (64) has received the first transmission information, the determination unit (60) is configured to determine that the first electrical power storage device (12) has switched to the active state based on the first transmission information; and
after the determination unit (60) has determined that the first electrical power storage device (12) has switched to the active state, the activation command unit (62) is configured to output a second command which is the command for switching the second electrical power storage device (14) to the active state to the second activation processing unit (123).

2. The electrical power system according to claim 1, wherein:
in a case that the reception unit (64) does not receive the first transmission information for a predetermined time period from the activation command unit (62) having output the first command, the determination unit (60) is configured to determine that the first electrical power storage device (12) has not switched to at least the active state; and
after the determination unit (60) has determined that the first electrical power storage device (12) has not switched to at least the active state, the activation command unit (62) is configured to output the second command to the second activation processing unit (123).

3. The electrical power system according to claim 1 or 2, further comprising a notification unit (28);
wherein in a case that the reception unit (64) does not receive the first transmission information during a predetermined time period after the activation command unit (62) has output the first command, the determination unit (60) is configured to determine that the first electrical power storage device (12) has not switched to at least the active state; and
after the determination unit (60) has determined that the first electrical power storage device (12) has not switched to at least the active state, the notification unit (28) is configured to issue a notification to an exterior of the first electrical power storage device (12) that electrical power is incapable of being output from the first electrical power storage device (12).

4. The electrical power system according to any one of claims 1 to 3, wherein:
after the second electrical power storage device (14) has switched to the active state by the second activation processing unit (123) receiving the second command, the second transmission unit (122) is configured to transmit second transmission information which is the transmission information: and
in a case that the reception unit (64) has received the second transmission information, the determination unit (60) is configured to determine, based on the second transmission information, that the second electrical power storage device (14) has switched to the active state.

5. The electrical power system according to any one of claims 1 to 4, wherein:
the transmission unit (120, 122) and the reception unit (64) are connected to be configured to communicate via a communication network (48);
the transmission unit (120, 122) is configured to transmit the transmission information via the communication network (48); and
the reception unit (64) is configured to receive the transmission information via the communication network (48).

6. The electrical power system according to claim 5, wherein:
the electrical power device (16) or the mounting device (57) comprises another transmission unit (66) configured to transmit via the communication network (48) identification assignment information provided in order to assign identification information for identifying the first electrical power storage device (12) and the second electrical power storage device (14); and
each of the first electrical power storage device (12) and the second electrical power storage device (14) includes another reception unit (120, 122) configured to receive the identification assignment information via the communication network (48).

7. The electrical power system according to claim 6, wherein the first transmission information includes first identification information which is the identification information assigned to the first electrical power storage device (12) by the first reception unit, which is the another reception unit included in the first electrical power storage device (12), configured to receive the identification assignment information.

8. The electrical power system according to claim 6 or 7, wherein the another transmission unit (120, 122) is configured to transmit the identification assignment information, in a case that a new one of the electrical power storage devices (12, 14) is mounted on the electrical power device (16).

9. A method of controlling an electrical power system (10) equipped with an electrical power storage device (12, 14) including an electrical power storage unit(44, 46), and an electrical power device (16) to and from which the electrical power storage device (12,14) is configured to be attached and detached;
the electrical power storage device (12, 14) comprising:
an activation processing unit (121, 123) configured to switch a state of the electrical power storage device (12, 14) to an active state in which the electrical power storage unit (44, 46) and an exterior of the electrical power storage device (12,14) are electrically connectable, or alternatively, an inactive state in which the electrical power storage unit (44, 46) and the exterior of the electrical power storage device (12,14) are not electrically connectable; and
a transmission unit (120, 122) configured to transmit to the exterior of the electrical power storage device (12, 14) information including at least one from among information indicating that the electrical power storage device (12,14) has switched from the inactive state to the active state, or alternatively, information transmitted to the exterior of the electrical power storage device (12,14) in a case that the electrical power storage device (12,14) is in the active state;
and further comprising a first electrical power storage device (12) and a second electrical power storage device (14) each of which includes the electrical power storage unit (44, 46);
wherein the control method comprises:
a first step (step S3) of transmitting, in a case that both the first electrical power storage device (12) and the second electrical power storage device (14) are in the inactive state, a command for switching the first electrical power storage device (12) to the active state only to a first activation processing unit (121) that is the activation processing unit included in the first electrical power storage device (12);
a second step (step S4) in which the first activation processing unit (121) receives a first command which is the command for switching the first electrical power storage device (12) to the active state, and thereby switches the first electrical power storage device (12) to the active state;
a third step (step S9) in which a first transmission unit (120), which is the transmission unit included in the first electrical power storage device (12), transmits the transmission information;
a fourth step (step S10) of receiving as first transmission information the transmission information transmitted by the first transmission unit (120);
a fifth step (step S11) of determining, based on the first transmission information, that the first electrical power storage device (12) has switched to the active state; and
a sixth step (step S13) of transmitting, after having determined that the first electrical power storage device (12) has switched to the active state, a second command, which is a command to switch the second electrical power storage device (14) to the active state, to a second activation processing unit (123), which is the activation processing unit included in the second electrical power storage device (14).

10. The method of controlling the electrical power system (10) according to claim 9, further comprising, prior to the third step, a seventh step (step S6) of transmitting identification assignment information provided in order to assign identification information for identifying the first electrical power storage device (12) and the second electrical power storage device (14).

11. A program configured to cause a computer (26) to execute the method of controlling the electrical power system (10) according to claim 9 or 10.

12. A storage medium (58) configured to store the program according to claim 11.

13. An electrical power device (16) to and from which an electrical power storage device (12, 14) including an electrical power storage unit (44, 46) is configured to be attached and detached;
wherein the electrical power device (16), or alternatively, a mounting device (57) mounted on the electrical power device (16) comprises an activation command unit (62) configured to output a command to the electrical power storage device (12, 14), a reception unit (64) configured to receive transmission information from an exterior of the electrical power device (16) or from an exterior of the mounting device (57), and a determination unit (60) configured to determine, based on the transmission information received by the reception unit (64), that the electrical power storage device (12, 14) has switched to the active state;
the electrical power storage device (12, 14) is provided so as to switch to an active state in which the electrical power storage unit (44, 46) and the exterior of the electrical power storage device (12,14) are electrically connectable, or alternatively, to an inactive state in which the electrical power storage unit (44, 46) and the exterior of the electrical power storage device (12, 14) are not electrically connectable;
the transmission information includes at least one from among information transmitted from the electrical power storage device (12, 14) and indicating that the electrical power storage device (12, 14) has switched from the inactive state to the active state, or alternatively, information transmitted to the exterior of the electrical power storage device (12, 14) in a case that the electrical power storage device (12, 14) is in the active state; and
the electrical power storage device (12, 14) includes at least a first electrical power storage device (12) and a second electrical power storage device (14) each of which includes the electrical power storage unit (44, 46);
the first electrical power storage device (12) includes a first activation processing unit (121) which is the activation processing unit, and a first transmission unit (120) which is the transmission unit;
the second electrical power storage device (14) includes a second activation processing unit (123) which is the activation processing unit, and a second transmission unit (122) which is the transmission unit;
in a case that both of the first electrical power storage device (12) and the second electrical power storage device (14) are in the inactive state, the activation command unit (62) is configured to output a first command which is the command for switching the first electrical power storage device (12) to the active state only to the first activation processing unit (121);
after the first electrical power storage device (12) has switched to the active state by the first activation processing unit (121) receiving the first command, the first transmission unit (120) is configured to transmit first transmission information which is the transmission information;
in a case that the reception unit (64) has received the first transmission information, the determination unit (60) is configured to determine that the first electrical power storage device (12) has switched to the active state based on the first transmission information; and
after the determination unit (60) has determined that the first electrical power storage device (12) has switched to the active state, the activation command unit (62) is configured to output a second command which is the command for switching the second electrical power storage device (14) to the active state to the second activation processing unit (123).

## Patentansprüche

1. Ein Stromversorgungssystem (10), das mit einer Stromspeichervorrichtung (12, 14) ausgestattet ist, die eine Stromspeichereinheit (44, 46) aufweist, sowie mit einer Stromversorgungsvorrichtung (16), an die die Stromspeichervorrichtung (12, 14) angeschlossen ist und von der sie getrennt werden kann;
wobei die Stromspeichervorrichtung (12, 14) aufweist:
eine Aktivierungsverarbeitungseinheit (121, 123), die so ausgebildet ist, dass sie einen Zustand der Stromspeichervorrichtung (12, 14) in einen aktiven Zustand versetzt, in dem die Stromspeichereinheit (44, 46) und die Außenseite der Stromspeichervorrichtung (12, 14) elektrisch verbindbar sind, oder alternativ in einen inaktiven Zustand, in dem die Stromspeichereinheit (44, 46) und die Außenseite der Stromspeichervorrichtung (12, 14) nicht elektrisch verbindbar sind; und
eine Übertragungseinheit (120, 122), die so ausgebildet ist, dass sie Übertragungsinformation an die Außenseite der Stromspeichervorrichtung (12, 14) überträgt;
wobei die Stromversorgungsvorrichtung (16) oder alternativ eine an der Stromversorgungsvorrichtung (16) angebrachte Befestigungsvorrichtung (57) eine Aktivierungsbefehlseinheit (62) aufweist, die so ausgebildet ist, dass sie einen Befehl an die Aktivierungsverarbeitungseinheit (121, 123) ausgibt, eine Empfangseinheit (64), die so ausgebildet ist, dass sie Übertragungsinformation von außerhalb der Stromversorgungsvorrichtung (16) oder von außerhalb der Befestigungsvorrichtung (57) empfängt, und eine Bestimmungseinheit (60), die so ausgebildet ist, dass sie auf der Grundlage der von der Empfangseinheit (64) empfangenen Übertragungsinformation bestimmt, dass die Stromspeichervorrichtung (12, 14) in den aktiven Zustand gewechselt ist;
die Aktivierungsverarbeitungseinheit (121, 123) so ausgebildet ist, dass sie entsprechend dem von der Aktivierungsbefehlseinheit (62) ausgegebenen Befehl in den aktiven oder den inaktiven Zustand wechselt;
die Übertragungsinformation zumindest eine der folgenden Informationen umfasst: eine Information, die anzeigt, dass die Stromspeichervorrichtung (12, 14) vom inaktiven Zustand in den aktiven Zustand gewechselt ist, oder alternativ eine Information, die an die Außenseite der Stromspeichervorrichtung (12, 14) übertragen wird, wenn sich die Stromspeichervorrichtung (12, 14) im aktiven Zustand befindet;
die Stromspeichervorrichtung (12, 14) zumindest eine erste Stromspeichervorrichtung (12) und eine zweite Stromspeichervorrichtung (14) aufweist, von denen jede die Stromspeichereinheit (44, 46) aufweist;
die erste Stromspeichervorrichtung (12) eine erste Aktivierungsverarbeitungseinheit (121) aufweist, die die Aktivierungsverarbeitungseinheit darstellt, und eine erste Übertragungseinheit (120), die die Übertragungseinheit darstellt;
die zweite Stromspeichervorrichtung (14) eine zweite Aktivierungsverarbeitungseinheit (123) aufweist, die die Aktivierungsverarbeitungseinheit darstellt, und eine zweite Übertragungseinheit (122), die die Übertragungseinheit darstellt;
im Falle, dass sich sowohl die erste Stromspeichervorrichtung (12) als auch die zweite Stromspeichervorrichtung (14) im inaktiven Zustand befinden, die Aktivierungsbefehlseinheit (62) so ausgebildet ist, dass sie einen ersten Befehl, der der Befehl zum Wechseln der ersten Stromspeichervorrichtung (12) in den aktiven Zustand ist, ausschließlich an die erste Aktivierungsverarbeitungseinheit (121) ausgibt;
nachdem die erste Stromspeichervorrichtung (12) durch Empfangen des ersten Befehls durch die erste Aktivierungsverarbeitungseinheit (121) in den aktiven Zustand versetzt wurde, die erste Übertragungseinheit (120) so ausgebildet ist, dass sie erste Übertragungsinformation, die die Übertragungsinformation darstellt, überträgt;
im Falle, dass die Empfangseinheit (64) die erste Übertragungsinformation empfangen hat, die Bestimmungseinheit (60) so ausgebildet ist, dass sie auf der Grundlage der ersten Übertragungsinformation bestimmt, dass die erste Stromspeichervorrichtung (12) in den aktiven Zustand gewechselt ist; und
nachdem die Bestimmungseinheit (60) bestimmt hat, dass die erste Stromspeichervorrichtung (12) in den aktiven Zustand gewechselt ist, die Aktivierungsbefehlseinheit (62) so ausgebildet ist, dass sie einen zweiten Befehl, der der Befehl zum Wechseln der zweiten Stromspeichervorrichtung (14) in den aktiven Zustand ist, an die zweite Aktivierungsverarbeitungseinheit (123) ausgibt.

2. Das Stromversorgungssystem nach Anspruch 1, wobei:
im Falle, dass die Empfangseinheit (64) die erste Übertragungsinformation für einen vorbestimmten Zeitraum nicht von der Aktivierungsbefehlseinheit (62) empfängt, die den ersten Befehl ausgegeben hat, die Bestimmungseinheit (60) so ausgebildet ist, dass sie bestimmt, dass die Stromspeichervorrichtung (12) zumindest nicht in den aktiven Zustand gewechselt ist; und
nachdem die Bestimmungseinheit (60) bestimmt hat, dass die erste Stromspeichervorrichtung (12) zumindest nicht in den aktiven Zustand gewechselt ist, die Aktivierungsbefehlseinheit (62) so ausgebildet ist, dass sie den zweiten Befehl an die zweite Aktivierungsverarbeitungseinheit (123) ausgibt.

3. Das Stromversorgungssystem nach Anspruch 1 oder 2, ferner aufweisend eine Benachrichtigungseinheit (28);
wobei, im Falle, dass die Empfangseinheit (64) die erste Übertragungsinformation während eines vorbestimmten Zeitraums, nachdem die Aktivierungsbefehlseinheit (62) den ersten Befehl ausgegeben hat, nicht empfängt, die Bestimmungseinheit (60) so ausgebildet ist, dass sie bestimmt, dass die erste Stromspeichervorrichtung (12) zumindest nicht in den aktiven Zustand gewechselt ist; und
nachdem die Bestimmungseinheit (60) bestimmt hat, dass die erste Stromspeichervorrichtung (12) zumindest nicht in den aktiven Zustand gewechselt ist, die Benachrichtigungseinheit (28) so ausgebildet ist, dass sie eine Benachrichtigung an eine Umgebung außerhalb der ersten Stromspeichervorrichtung (12) ausgibt, dass von der ersten Stromspeichervorrichtung (12) kein Strom ausgegeben werden kann.

4. Das Stromversorgungssystem nach einem der Ansprüche 1 bis 3, wobei:
nachdem die zweite Stromspeichervorrichtung (14) durch Empfangen des zweiten Befehls durch die zweite Aktivierungsverarbeitungseinheit (123) in den aktiven Zustand gewechselt ist, die zweite Übertragungseinheit (122) so ausgebildet ist, dass sie zweite Übertragungsinformation, bei der es sich um die Übertragungsinformation handelt, überträgt; und
im Falle, dass die Empfangseinheit (64) die zweite Übertragungsinformation empfangen hat, die Bestimmungseinheit (60) so ausgebildet ist, dass sie auf der Grundlage der zweiten Übertragungsinformation bestimmt, dass die zweite Stromspeichervorrichtung (14) in den aktiven Zustand gewechselt ist.

5. Das Stromversorgungssystem nach einem der Ansprüche 1 bis 4, wobei:
die Übertragungseinheit (120, 122) und die Empfangseinheit (64) so miteinander verbunden sind, dass sie über ein Kommunikationsnetzwerk (48) kommunizieren können;
die Übertragungseinheit (120, 122) so ausgebildet ist, dass sie die Übertragungsinformation über das Kommunikationsnetzwerk (48) überträgt; und
die Empfangseinheit (64) so ausgebildet ist, dass sie die Übertragungsinformation über das Kommunikationsnetzwerk (48) empfängt.

6. Das Stromversorgungssystem nach Anspruch 5, wobei:
die Stromversorgungsvorrichtung (16) oder die Befestigungsvorrichtung (57) eine weitere Übertragungseinheit (66) aufweist, die so ausgebildet ist, dass sie über das Kommunikationsnetzwerk (48) Identifikationszuweisungsinformation überträgt, die bereitgestellt wird, um zur Identifizierung der ersten Stromspeichervorrichtung (12) und der zweiten Stromspeichervorrichtung (14) Identifikationsinformation zuzuweisen; und
sowohl die erste Stromspeichervorrichtung (12) als auch die zweite Stromspeichervorrichtung (14) jeweils eine weitere Empfangseinheit (120, 122) aufweisen, die so ausgebildet ist, dass sie die Identifikationszuweisungsinformation über das Kommunikationsnetzwerk (48) empfängt.

7. Das Stromversorgungssystem nach Anspruch 6, wobei die erste Übertragungsinformation erste Identifikationsinformation enthält, bei der es sich um die Identifikationsinformation handelt, die der ersten Stromspeichervorrichtung (12) von der ersten Empfangseinheit zugewiesen wurde, bei der es sich um die weitere Empfangseinheit handelt, die in der ersten Stromspeichervorrichtung (12) enthalten ist, die zum Empfangen der Identifikationszuweisungsinformation ausgebildet ist.

8. Das Stromversorgungssystem nach Anspruch 6 oder 7, wobei die weitere Übertragungseinheit (120, 122) so ausgebildet ist, dass sie, im Falle, dass eine neue der Stromspeichervorrichtungen (12, 14) an der Stromversorgungsvorrichtung (16) angebracht wird, die Identifikationszuweisungsinformation überträgt.

9. Ein Verfahren zum Steuern eines Stromversorgungssystems (10), das mit einer Stromspeichervorrichtung (12, 14) mit einer Stromspeichereinheit (44, 46) sowie einer Stromversorgungsvorrichtung (16) ausgestattet ist, an die die Stromspeichervorrichtung (12, 14) angeschlossen und von der sie getrennt werden kann;
wobei die Stromspeichervorrichtung (12, 14) aufweist:
eine Aktivierungsverarbeitungseinheit (121, 123), die so ausgebildet ist, dass sie einen Zustand der Stromspeichervorrichtung (12, 14) in einen aktiven Zustand, in dem die Stromspeichereinheit (44, 46) und die Außenseite der Stromspeichervorrichtung (12, 14) elektrisch verbindbar sind, oder alternativ in einen inaktiven Zustand, in dem die Stromspeichereinheit (44, 46) und die Außenseite der Stromspeichervorrichtung (12, 14) nicht elektrisch verbindbar sind, überführt; und
eine Übertragungseinheit (120, 122), die so ausgebildet ist, dass sie an die Außenseite der Stromspeichervorrichtung (12, 14) Information überträgt, die zumindest eine der folgenden Informationen enthält: Information, die anzeigt, dass die Stromspeichervorrichtung (12, 14) vom inaktiven Zustand in den aktiven Zustand gewechselt ist, oder alternativ Information, die an die Außenseite der Stromspeichervorrichtung (12, 14) übertragen wird, falls sich die Stromspeichervorrichtung (12, 14) im aktiven Zustand befindet;
und ferner aufweisend eine erste Stromspeichervorrichtung (12) und eine zweite Stromspeichervorrichtung (14), von denen jede die Stromspeichereinheit (44, 46) aufweist; wobei das Steuerverfahren umfasst:
einen ersten Schritt (Schritt S3) des Übertragens eines Befehls zum Wechseln der ersten Stromspeichervorrichtung (12) in den aktiven Zustand ausschließlich an eine erste Aktivierungsverarbeitungseinheit (121), bei der es sich um die in der ersten Stromspeichervorrichtung (12) enthaltene Aktivierungsverarbeitungseinheit handelt, im Falle, dass sich sowohl die erste Stromspeichervorrichtung (12) als auch die zweite Stromspeichervorrichtung (14) im inaktiven Zustand befinden;
einen zweiten Schritt (Schritt S4), in dem die erste Aktivierungsverarbeitungseinheit (121) einen ersten Befehl empfängt, bei dem es sich um den Befehl zum Wechseln der ersten Stromspeichervorrichtung (12) in den aktiven Zustand handelt, und dadurch die erste Stromspeichervorrichtung (12) in den aktiven Zustand wechselt;
einen dritten Schritt (Schritt S9), in dem eine erste Übertragungseinheit (120), bei der es sich um die in der ersten Stromspeichervorrichtung (12) enthaltene Übertragungseinheit handelt, die Übertragungsinformation überträgt;
einen vierten Schritt (Schritt S10), bei dem die von der ersten Übertragungseinheit (120) übertragene Übertragungsinformation als erste Übertragungsinformation empfangen wird;
einen fünften Schritt (Schritt S11), bei dem auf der Grundlage der ersten Übertragungsinformation bestimmt wird, dass die erste Stromspeichervorrichtung (12) in den aktiven Zustand gewechselt ist; und
einen sechsten Schritt (Schritt S13) des Übertragens eines zweiten Befehls, bei dem es sich um einen Befehl zum Wechseln der zweiten Stromspeichervorrichtung (14) in den aktiven Zustand handelt, an eine zweite Aktivierungsverarbeitungseinheit (123), bei der es sich um die in der zweiten Stromspeichervorrichtung (14) enthaltene Aktivierungsverarbeitungseinheit handelt, nachdem bestimmt wurde, dass die erste Stromspeichervorrichtung (12) in den aktiven Zustand gewechselt ist.

10. Das Verfahren zur Steuerung des Stromversorgungssystems (10) nach Anspruch 9, das ferner vor dem dritten Schritt einen siebten Schritt (Schritt S6) umfasst, bei dem Identifikationszuweisungsinformation übertragen wird, die bereitgestellt wird, um zur Identifizierung der ersten Stromspeichervorrichtung (12) und der zweiten Stromspeichervorrichtung (14) Identifikationsinformation zuzuweisen.

11. Ein Programm, das so ausgebildet ist, dass es einen Computer (26) veranlasst, das Verfahren zur Steuerung des Stromversorgungssystems (10) gemäß Anspruch 9 oder 10 auszuführen.

12. Ein Speichermedium (58), das so ausgebildet ist, dass es das Programm gemäß Anspruch 11 speichert.

13. Eine Stromversorgungsvorrichtung (16), an die eine Stromspeichervorrichtung (12, 14) mit einer Stromspeichereinheit (44, 46) angeschlossen und von dieser getrennt werden kann;
wobei die Stromversorgungsvorrichtung (16) oder alternativ eine an der Stromversorgungsvorrichtung (16) angebrachte Befestigungsvorrichtung (57) eine Aktivierungsbefehlseinheit (62) aufweist, die dazu ausgebildet ist, einen Befehl an die Stromspeichervorrichtung (12, 14) auszugeben, eine Empfangseinheit (64), die so ausgebildet ist, dass sie Übertragungsinformation von außerhalb der Stromversorgungsvorrichtung (16) oder von außerhalb der Befestigungsvorrichtung (57) empfängt, und eine Bestimmungseinheit (60), die so ausgebildet ist, dass sie auf der Grundlage der von der Empfangseinheit (64) empfangenen Übertragungsinformation bestimmt, dass die Stromspeichervorrichtung (12, 14) in den aktiven Zustand gewechselt ist;
die Stromspeichervorrichtung (12, 14) so ausgebildet ist, dass sie in einen aktiven Zustand wechselt, in dem die Stromspeichereinheit (44, 46) und die Außenseite der Stromspeichervorrichtung (12, 14) elektrisch verbindbar sind, oder alternativ in einen inaktiven Zustand, in dem die Stromspeichereinheit (44, 46) und die Außenseite der Stromspeichervorrichtung (12, 14) elektrisch nicht verbindbar sind;
die Übertragungsinformation zumindest eine der folgenden Informationen umfasst: Information, die von der Stromspeichervorrichtung (12, 14) übertragen wird und anzeigt, dass die Stromspeichervorrichtung (12, 14) vom inaktiven Zustand in den aktiven Zustand gewechselt ist, oder alternativ Information, die an die Außenseite der Stromspeichervorrichtung (12, 14) übertragen wird, wenn sich die Stromspeichervorrichtung (12, 14) im aktiven Zustand befindet; und
die Stromspeichervorrichtung (12, 14) zumindest eine erste Stromspeichervorrichtung (12) und eine zweite Stromspeichervorrichtung (14) aufweist, von denen jede die Stromspeichereinheit (44, 46) enthält;
die erste Stromspeichervorrichtung (12) eine erste Aktivierungsverarbeitungseinheit (121) enthält, die die Aktivierungsverarbeitungseinheit darstellt, und eine erste Übertragungseinheit (120) enthält, die die Übertragungseinheit darstellt;
die zweite Stromspeichervorrichtung (14) eine zweite Aktivierungsverarbeitungseinheit (123) enthält, die die Aktivierungsverarbeitungseinheit darstellt, sowie eine zweite Übertragungseinheit (122), die die Übertragungseinheit darstellt;
im Falle, dass sich sowohl die erste Stromspeichervorrichtung (12) als auch die zweite Stromspeichervorrichtung (14) im inaktiven Zustand befinden, die Aktivierungsbefehlseinheit (62) so ausgebildet ist, dass sie einen ersten Befehl, der der Befehl zum Wechseln der ersten Stromspeichervorrichtung (12) in den aktiven Zustand ist, ausschließlich an die erste Aktivierungsverarbeitungseinheit (121) ausgibt;
nachdem die erste Stromspeichervorrichtung (12) durch Empfangen des ersten Befehls durch die erste Aktivierungsverarbeitungseinheit (121) in den aktiven Zustand gewechselt ist, die erste Übertragungseinheit (120) so ausgebildet ist, dass sie die Übertragungsinformation darstellende erste Übertragungsinformation überträgt;
im Falle, dass die Empfangseinheit (64) die erste Übertragungsinformation empfangen hat, die Bestimmungseinheit (60) so ausgebildet ist, dass sie auf der Grundlage der ersten Übertragungsinformation bestimmt, dass die erste Stromspeichervorrichtung (12) in den aktiven Zustand gewechselt ist; und
nachdem die Bestimmungseinheit (60) bestimmt hat, dass die erste Stromspeichervorrichtung (12) in den aktiven Zustand gewechselt ist, die Aktivierungsbefehlseinheit (62) so ausgebildet ist, dass sie einen zweiten Befehl, der der Befehl zum Wechseln der zweiten Stromspeichervorrichtung (14) in den aktiven Zustand ist, an die zweite Aktivierungsverarbeitungseinheit (123) ausgibt.

## Revendications

1. Système d'alimentation électrique (10) équipé d'un dispositif de stockage d'énergie électrique (12, 14) comprenant une unité de stockage d'énergie électrique (44, 46), et un dispositif d'alimentation électrique (16) par rapport auquel le dispositif de stockage d'énergie électrique (12, 14) est configuré pour être attaché et détaché ;
le dispositif de stockage d'énergie électrique (12, 14) comportant :
une unité de traitement d'activation (121, 123) configurée pour commuter un état du dispositif de stockage d'énergie électrique (12, 14) vers un état actif dans lequel l'unité de stockage d'énergie électrique (44, 46) et l'extérieur du dispositif de stockage d'énergie électrique (12, 14) sont électriquement connectables, ou en variante, un état inactif dans lequel l'unité de stockage d'énergie électrique (44, 46) et l'extérieur du dispositif de stockage d'énergie électrique (12, 14) ne sont pas électriquement connectables ; et
une unité de transmission (120, 122) configurée pour transmettre des informations de transmission à l'extérieur du dispositif de stockage d'énergie électrique (12, 14) ;
dans lequel le dispositif d'alimentation électrique (16), ou en variante, un dispositif de montage (57) monté sur le dispositif d'alimentation électrique (16) comprend une unité d'instruction d'activation (62) configurée pour délivrer une instruction à l'unité de traitement d'activation (121, 123), une unité de réception (64) configurée pour recevoir des informations de transmission de l'extérieur du dispositif d'alimentation électrique (16) ou de l'extérieur du dispositif de montage (57), et une unité de détermination (60) configurée pour déterminer, sur la base des informations de transmission reçues par l'unité de réception (64), que le dispositif de stockage d'énergie électrique (12, 14) a commuté vers l'état actif ;
l'unité de traitement d'activation (121, 123) est fournie de manière à commuter vers l'état actif ou l'état inactif conformément à l'instruction délivrée par l'unité d'instruction d'activation (62) ;
les informations de transmission comprennent au moins une information parmi des informations indiquant que le dispositif de stockage d'énergie électrique (12, 14) a commuté de l'état inactif à l'état actif, ou en variante, des informations transmises à l'extérieur du dispositif de stockage d'énergie électrique (12, 14) dans le cas où le dispositif de stockage d'énergie électrique (12, 14) est dans l'état actif ;
le dispositif de stockage d'énergie électrique (12, 14) comporte au moins un premier dispositif de stockage d'énergie électrique (12) et un deuxième dispositif de stockage d'énergie électrique (14), chacun comprenant l'unité de stockage d'énergie électrique (44, 46) ;
le premier dispositif de stockage d'énergie électrique (12) comprend une première unité de traitement d'activation (121) qui est l'unité de traitement d'activation, et une première unité de transmission (120) qui est l'unité de transmission ;
le deuxième dispositif de stockage d'énergie électrique (14) comprend une deuxième unité de traitement d'activation (123) qui est l'unité de traitement d'activation, et une deuxième unité de transmission (122) qui est l'unité de transmission ;
dans le cas où à la fois le premier dispositif de stockage d'énergie électrique (12) et le deuxième dispositif de stockage d'énergie électrique (14) sont dans l'état inactif, l'unité d'instruction d'activation (62) est configurée pour délivrer une première instruction, qui est l'instruction pour la commutation du premier dispositif de stockage d'énergie électrique (12) vers l'état actif, uniquement à la première unité de traitement d'activation (121) ;
après que le premier dispositif de stockage d'énergie électrique (12) a commuté vers l'état actif par la réception de la première instruction par la première unité de traitement d'activation (121), la première unité de transmission (120) est configurée pour transmettre des premières informations de transmission qui sont les informations de transmission ;
dans le cas où l'unité de réception (64) a reçu les premières informations de transmission, l'unité de détermination (60) est configurée pour déterminer que le premier dispositif de stockage d'énergie électrique (12) a commuté vers l'état actif sur la base des premières informations de transmission ; et
après que l'unité de détermination (60) a déterminé que le premier dispositif de stockage d'énergie électrique (12) a commuté vers l'état actif, l'unité d'instruction d'activation (62) est configurée pour délivrer une deuxième instruction, qui est l'instruction pour la commutation du deuxième dispositif de stockage d'énergie électrique (14) vers l'état actif à la deuxième unité de traitement d'activation (123).

2. Système d'alimentation électrique selon la revendication 1, dans lequel :
dans le cas où l'unité de réception (64) ne reçoit pas les premières informations de transmission pendant une période de temps prédéterminée à partir du moment où l'unité d'instruction d'activation (62) a délivré la première instruction, l'unité de détermination (60) est configurée pour déterminer que le premier dispositif de stockage d'énergie électrique (12) n'a pas commuté vers au moins l'état actif ; et
après que l'unité de détermination (60) a déterminé que le premier dispositif de stockage d'énergie électrique (12) n'a pas commuté vers au moins l'état actif, l'unité d'instruction d'activation (62) est configurée pour délivrer la deuxième instruction à la deuxième unité de traitement d'activation (123).

3. Système d'alimentation électrique selon la revendication 1 ou 2, comportant en outre une unité de notification (28) ;
dans le cas où l'unité de réception (64) ne reçoit pas les premières informations de transmission pendant une période de temps prédéterminée après que l'unité d'instruction d'activation (62) a délivré la première instruction, l'unité de détermination (60) est configurée pour déterminer que le premier dispositif de stockage d'énergie électrique (12) n'a pas commuté vers au moins l'état actif ; et
après que l'unité de détermination (60) a déterminé que le premier dispositif de stockage d'énergie électrique (12) n'a pas commuté vers au moins l'état actif, l'unité de notification (28) est configurée pour délivrer une notification à l'extérieur du premier dispositif de stockage d'énergie électrique (12) indiquant que l'énergie électrique ne peut pas être délivrée par le premier dispositif de stockage d'énergie électrique (12).

4. Système d'alimentation électrique selon l'une quelconque des revendications 1 à 3, dans lequel :
après que le deuxième dispositif de stockage d'énergie électrique (14) a commuté vers l'état actif par la réception de la deuxième instruction par la deuxième unité de traitement d'activation (123), la deuxième unité de transmission (122) est configurée pour transmettre des deuxièmes informations de transmission qui sont les informations de transmission : et
dans le cas où l'unité de réception (64) a reçu les deuxièmes informations de transmission, l'unité de détermination (60) est configurée pour déterminer, sur la base des deuxièmes informations de transmission, que le deuxième dispositif de stockage d'énergie électrique (14) a commuté vers l'état actif.

5. Système d'alimentation électrique selon l'une quelconque des revendications 1 à 4, dans lequel :
l'unité de transmission (120, 122) et l'unité de réception (64) sont connectées de manière à être configurées pour communiquer via un réseau de communication (48) ;
l'unité de transmission (120, 122) est configurée pour transmettre les informations de transmission via le réseau de communication (48) ; et
l'unité de réception (64) est configurée pour recevoir les informations de transmission via le réseau de communication (48).

6. Système d'alimentation électrique selon la revendication 5, dans lequel :
le dispositif d'alimentation électrique (16) ou le dispositif de montage (57) comporte une autre unité de transmission (66) configurée pour transmettre via le réseau de communication (48) des informations d'attribution d'identification fournies afin d'attribuer des informations d'identification permettant d'identifier le premier dispositif de stockage d'énergie électrique (12) et le deuxième dispositif de stockage d'énergie électrique (14) ; et
chacun du premier dispositif de stockage d'énergie électrique (12) et du deuxième dispositif de stockage d'énergie électrique (14) comprend une autre unité de réception (120, 122) configurée pour recevoir les informations d'attribution d'identification via le réseau de communication (48).

7. Système d'alimentation électrique selon la revendication 6, dans lequel les premières informations de transmission comprennent des premières informations d'identification qui sont les informations d'identification attribuées au premier dispositif de stockage d'énergie électrique (12) par la première unité de réception, qui est l'autre unité de réception comprise dans le premier dispositif de stockage d'énergie électrique (12), configurée pour recevoir les informations d'attribution d'identification.

8. Système d'alimentation électrique selon la revendication 6 ou 7, dans lequel l'autre unité de transmission (120, 122) est configurée pour transmettre les informations d'attribution d'identification, dans le cas où un nouveau dispositif de stockage d'énergie électrique (12, 14) est monté sur le dispositif d'alimentation électrique (16).

9. Procédé de commande d'un système d'alimentation électrique (10) équipé d'un dispositif de stockage d'énergie électrique (12, 14) comprenant une unité de stockage d'énergie électrique (44, 46), et d'un dispositif d'alimentation électrique (16) par rapport auquel le dispositif de stockage d'énergie électrique (12, 14) est configuré pour être attaché et détaché ;
le dispositif de stockage d'énergie électrique (12, 14) comportant :
une unité de traitement d'activation (121, 123) configurée pour commuter un état du dispositif de stockage d'énergie électrique (12, 14) vers un état actif dans lequel l'unité de stockage d'énergie électrique (44, 46) et l'extérieur du dispositif de stockage d'énergie électrique (12, 14) sont électriquement connectables, ou en variante, un état inactif dans lequel l'unité de stockage d'énergie électrique (44, 46) et l'extérieur du dispositif de stockage d'énergie électrique (12, 14) ne sont pas électriquement connectables ; et
une unité de transmission (120, 122) configurée pour transmettre à l'extérieur du dispositif de stockage d'énergie électrique (12, 14) des informations comprenant au moins une information parmi des informations indiquant que le dispositif de stockage d'énergie électrique (12, 14) a commuté de l'état inactif vers l'état actif, ou en variante, des informations transmises à l'extérieur du dispositif de stockage d'énergie électrique (12, 14) dans le cas où le dispositif de stockage d'énergie électrique (12, 14) est dans l'état actif ;
et comportant en outre un premier dispositif de stockage d'énergie électrique (12) et un deuxième dispositif de stockage d'énergie électrique (14), chacun comprenant l'unité de stockage d'énergie électrique (44, 46) ;
dans lequel le procédé de commande comporte :
une première étape (étape S3) de transmission, dans le cas où à la fois le premier dispositif de stockage d'énergie électrique (12) et le deuxième dispositif de stockage d'énergie électrique (14) sont dans l'état inactif, d'une instruction pour la commutation du premier dispositif de stockage d'énergie électrique (12) vers l'état actif uniquement à une première unité de traitement d'activation (121) qui est l'unité de traitement d'activation comprise dans le premier dispositif de stockage d'énergie électrique (12) ;
une deuxième étape (étape S4) dans laquelle la première unité de traitement d'activation (121) reçoit une première instruction qui est l'instruction pour la commutation du premier dispositif de stockage d'énergie électrique (12) vers l'état actif, et par conséquent commute le premier dispositif de stockage d'énergie électrique (12) vers l'état actif ;
une troisième étape (étape S9) dans laquelle une première unité de transmission (120), qui est l'unité de transmission comprise dans le premier dispositif de stockage d'énergie électrique (12), transmet les informations de transmission ;
une quatrième étape (étape S10) de réception en tant que premières informations de transmission des informations de transmission transmises par la première unité de transmission (120) ;
une cinquième étape (étape S11) de détermination, sur la base des premières informations de transmission, que le premier dispositif de stockage d'énergie électrique (12) a commuté vers l'état actif ; et
une sixième étape (étape S13) de transmission, après avoir déterminé que le premier dispositif de stockage d'énergie électrique (12) a commuté vers l'état actif, d'une deuxième instruction, qui est une instruction pour commuter le deuxième dispositif de stockage d'énergie électrique (14) vers l'état actif, à une deuxième unité de traitement d'activation (123), qui est l'unité de traitement d'activation comprise dans le deuxième dispositif de stockage d'énergie électrique (14).

10. Procédé de commande du système d'alimentation électrique (10) selon la revendication 9, comportant en outre, avant la troisième étape, une septième étape (étape S6) de transmission d'informations d'attribution d'identification fournies afin d'attribuer des informations d'identification pour l'identification du premier dispositif de stockage d'énergie électrique (12) et du deuxième dispositif de stockage d'énergie électrique (14).

11. Programme configuré pour amener un ordinateur (26) à exécuter le procédé de commande du système d'alimentation électrique (10) selon la revendication 9 ou 10.

12. Support de stockage (58) configuré pour stocker le programme selon la revendication 11.

13. Dispositif d'alimentation électrique (16) par rapport auquel un dispositif de stockage d'énergie électrique (12, 14) comprenant une unité de stockage d'énergie électrique (44, 46) est configuré pour être attaché et détaché ;
dans lequel le dispositif d'alimentation électrique (16), ou en variante, un dispositif de montage (57) monté sur le dispositif d'alimentation électrique (16) comporte une unité d'instruction d'activation (62) configurée pour délivrer une instruction vers le dispositif de stockage d'énergie électrique (12, 14), une unité de réception (64) configurée pour recevoir des informations de transmission provenant de l'extérieur du dispositif d'alimentation électrique (16) ou de l'extérieur du dispositif de montage (57), et une unité de détermination (60) configurée pour déterminer, sur la base des informations de transmission reçues par l'unité de réception (64), que le dispositif de stockage d'énergie électrique (12, 14) a commuté vers l'état actif ;
le dispositif de stockage d'énergie électrique (12, 14) est fourni de manière à commuter vers un état actif dans lequel l'unité de stockage d'énergie électrique (44, 46) et l'extérieur du dispositif de stockage d'énergie électrique (12, 14) sont électriquement connectables, ou en variante, vers un état inactif dans lequel l'unité de stockage d'énergie électrique (44, 46) et l'extérieur du dispositif de stockage d'énergie électrique (12, 14) ne sont pas électriquement connectables ;
les informations de transmission comprennent au moins une information parmi des informations transmises par le dispositif de stockage d'énergie électrique (12, 14) indiquant que le dispositif de stockage d'énergie électrique (12, 14) a commuté de l'état inactif vers l'état actif, ou en variante,
des informations transmises à l'extérieur du dispositif de stockage d'énergie électrique (12, 14) dans un cas où le dispositif de stockage d'énergie électrique (12, 14) est dans l'état actif ; et
le dispositif de stockage d'énergie électrique (12, 14) comporte au moins un premier dispositif de stockage d'énergie électrique (12) et un deuxième dispositif de stockage d'énergie électrique (14), chacun comprenant l'unité de stockage d'énergie électrique (44, 46) ;
le premier dispositif de stockage d'énergie électrique (12) comprend une première unité de traitement d'activation (121) qui est l'unité de traitement d'activation, et une première unité de transmission (120) qui est l'unité de transmission ;
le deuxième dispositif de stockage d'énergie électrique (14) comprend une deuxième unité de traitement d'activation (123) qui est l'unité de traitement d'activation, et une deuxième unité de transmission (122) qui est l'unité de transmission ;
dans le cas où à la fois le premier dispositif de stockage d'énergie électrique (12) et le deuxième dispositif de stockage d'énergie électrique (14) sont dans l'état inactif, l'unité d'instruction d'activation (62) est configurée pour délivrer une première instruction, qui est l'instruction pour la commutation du premier dispositif de stockage d'énergie électrique (12) vers l'état actif, uniquement à la première unité de traitement d'activation (121) ;
après que le premier dispositif de stockage d'énergie électrique (12) a commuté vers l'état actif par la réception de la première instruction par la première unité de traitement d'activation (121), la première unité de transmission (120) est configurée pour transmettre des premières informations de transmission qui sont les informations de transmission ;
dans le cas où l'unité de réception (64) a reçu les premières informations de transmission, l'unité de détermination (60) est configurée pour déterminer que le premier dispositif de stockage d'énergie électrique (12) a commuté vers l'état actif sur la base des premières informations de transmission ; et
après que l'unité de détermination (60) a déterminé que le premier dispositif de stockage d'énergie électrique (12) a commuté vers l'état actif, l'unité d'instruction d'activation (62) est configurée pour délivrer une deuxième instruction, qui est l'instruction pour la commutation du deuxième dispositif de stockage d'énergie électrique (14) vers l'état actif à la deuxième unité de traitement d'activation (123).
